# EUROPEAN PATENT SPECIFICATION

(11) **EP 4 637 349 B1**
(45) Date of publication and mention of the grant of the patent: **14.10.2026**
(21) Application number: 23833782.8
(22) Date of filing: 18.12.2023
(51) Int. Cl.: A01N 25/28, A01N 65/00, A01P 1/00, A01P 3/00, A01P 5/00, A01P 7/02, A01P 7/04, A01P 9/00, A01P 11/00, A01P 13/00

(54) **CONTROLLED RELEASE OF ENCAPSULATED AGROCHEMICALS BY BIODEGRADATION**
KONTROLLIERTE FREISETZUNG VON VERKAPSELTEN AGROCHEMIKALIEN DURCH BIOLOGISCHEN ABBAU
LIBÉRATION CONTRÔLÉE DE PRODUITS AGROCHIMIQUES ENCAPSULÉS PAR BIODÉGRADATION

(30) Priority: 19.12.2022 LU 503213
(43) Date of publication of application: 29.10.2025
(73) Proprietor: Xampla Limited, Cambridge, Cambridgeshire CB4 0FW (GB)
(72) Inventor: TAYLOR, James Ward, Cambridge Cambridgeshire CB4 0FW (GB); RODRIGUEZ GARCIA, Marc, Cambridge Cambridgeshire CB4 0FW (GB); HOLLAND, Lynette Anne Makins, Cambridge Cambridgeshire CB4 0FW (GB); BROWNING, Luke Wayne, Cambridge Cambridgeshire CB4 0FW (GB)
(74) Representative: Pott, Thomas
(86) International application number: PCT/EP2023/086469
(87) International publication number: WO 2024/133151

(56) References cited:
- EP-A1- 3 967 157
- WO-A1-2022/029490
- US-A1- 2007 196 410
- US-A1- 2022 162 444
- US-A1- 2022 169 858
- LIU BAOXIA ET AL: "Construction of a controlled-release delivery system for pesticides using biodegradable PLA-based microcapsules", COLLOIDS AND SURFACES B: BIOINTERFACES, ELSEVIER AMSTERDAM, NL, vol. 144, 1 April 2016 (2016-04-01), pages 38 - 45, XP029548223, ISSN: 0927-7765, DOI: 10.1016/J.COLSURFB.2016.03.084

## Description

### FIELD OF THE INVENTION

The present invention relates to a method for the preparation of biodegradable microcapsules comprising an agrochemical and to a method for preparing a biodegradable microcapsules composition. The present invention also relates to the biodegradable microcapsules and to the biodegradable microcapsules composition *per* se.

### BACKGROUND

Agrochemicals, such as fertilisers and pesticides (e. g. herbicides, insecticides, fungicides), are key to ensuring food production to feed an ever-growing world population. Many agrochemicals are applied onto crops by spraying of a water-based slurry or solution of actives. This enables accurate dosing of the agrochemicals and spreading across a large area.

The agrochemicals are often encapsulated and applied to crops as a diluted slurry of insoluble encapsulates suspended in water. The encapsulation protects the farmer from the often-hazardous agrochemicals. It can also enable stability in the presence of other chemicals, so that otherwise incompatible actives can be delivered in a single formulation of multiple actives. In addition, it can protect the active from unwanted degradation due to exposure to environmental factors such as UV, evaporation or wash off from the plants and soil by rain.

However, current encapsulates release their contents by being broken by mechanical action, such as rubbing or pressing, which means that the active can remain unavailable for a period of time and is then suddenly released all in one go. This can expose plants to high local concentrations of these actives, which can cause damage to the plants.

Furthermore, the materials currently used to encapsulate such agrochemicals are synthetic and non-biodegradable, so that they persist in the soil long after the actives have been delivered. They can also be washed off into water courses further polluting these and entering the food chain.

There is therefore a need for biodegradable encapsulation materials to deliver agrochemicals. Commonly available biodegradable encapsulation materials, for example starch, are soluble in water and so are not suitable for spraying onto crops as a water-based slurry. They do not provide any of the benefits of encapsulation due to the premature release of the active when the powdered encapsulate is added to water.

Some degradable polymers, such as polylactic acid and polyvinyl alcohol, can be used as encapsulate shells and can eventually degrade, but this occurs very slowly, over months and years, which is too slow to usefully release the agrochemicals. Their release is either through mechanical force or via slow diffusion through a porous shell. Construction of a controlled-release delivery system for pesticides using biodegradable PLA-based microcapsules is described e.g. in Colloids and Surfaces B: Biointerfaces, Volume 144, 1 August 2016, Pages 38-45. JP 2006067956 discloses the formulation of biodegradable PLA microcapsule encapsulating useful microorganisms for agricultural use.

Some biodegradable encapsulates can be made from animal derived materials, such as gelatine or silk, however using animal-derived proteins is highly undesirable (Liu, M., Millard, P.-E., Urch, H., Zeyons, O., Findley, D., Konradi, R., Marelli, B., Microencapsulation of High-Content Actives Using Biodegradable Silk Materials, Small 2022, 18, 2201487).

US 2022/162444 A1 discloses controlled release biodegrading microcapsules comprising polypeptide chains. WO 2022/029490 A1 relates to a process for the preparation of biodegradable microcapsules, in particular biodegradable protein- and/or polysaccharide-based microcapsules, as well as dispersions of such microcapsules (microcapsule slurry) that enclose at least one hydrophobic active ingredient. In addition, WO 2022/029490 A1 relates to biodegradable microcapsules obtainable by the process according to said document. In another aspect, WO 2022/029490 A1 relates to the use of the microcapsules and dispersions as an ingredient in consumer products. US 2007/196410 A1 discloses a slow-release microcapsule composition for the safe delivery of agriculturally active material that is formed using an encapsulation process. A microencapsulated suspension of agriculturally active material according to US 2007/196410 A1 includes an encapsulating agent formed from a graft copolymer of starch and at least on vinyl monomer. EP 3 967 157 A1 relates to plant-based microcapsules for the efficient encapsulation and retention of water-soluble ingredients, as well as the efficient co-encapsulation of water-soluble and water-insoluble ingredients. EP 3 967 157 A1 also relates to compositions comprising the microcapsules, a method of making the microcapsules and compositions, and to uses of the microcapsules and compositions. US 2022/169858 A1 relates to plant based materials, methods for their manufacture and biomaterials incorporating plant based materials. Baoxia Liu et al. disclose in "Construction of a controlled-release delivery system for pesticides using biodegradable PLA-based microcapsules", Colloids Surf. B Biointerfaces 2016, 144, 38-45, three kinds of polylactic acid (PLA) carriers including microspheres, microcapsules, and porous microcapsules for controlled delivery of Lambda-Cyhalothrin (LC) via premix membrane emulsification (PME). Compared with LC technical and commercial microcapsule formulation, the microcapsule systems showed a significantly sustained release of LC for a longer period.

There is therefore a need for a plant-based agrochemical delivery system that quickly degrades in the environment to harmless components, protects volatile actives from premature release, releases its cargo in a controlled way over several days to avoid crop damage and extend the life of the actives, protects the actives from degradation during storage and the farmer from the actives whilst being insoluble, and is stable in water and robust enough to be sprayed. In addition, a plant-based biodegradable encapsulate would also be more compatible with natural actives, such as essential oils or microbes.

### SUMMARY OF THE INVENTION

Viewed from a first aspect, the present invention provides a method for the preparation of biodegradable microcapsules comprising an agrochemical, the method comprising:
(a) forming a suspension of particles comprising one or more plant-based protein(s) in a solvent system, wherein the solvent system comprises miscible co-solvents, wherein a first co-solvent is an organic acid and a second co-solvent is water, and wherein the solids content of the plant-based protein in the suspension is 5 weight-% or more;
(b) reducing the size of the protein particles to d₅₀ of 20 microns or less by volume distribution as determined by laser diffraction;
(c) dispersing an agrochemical in the plant-based protein suspension to form a composition; and either
   (d1) spray-drying the composition to form microcapsules, or
   (d2) dispersing the composition in an immiscible oil to form microcapsules and removing at least part of the oil from the microcapsules.

Viewed from another aspect, the present invention provides biodegradable microcapsules comprising an agrochemical obtained by or obtainable by the method as hereinbefore described.

Viewed from another aspect, the present invention provides a method for the preparation of a biodegradable microcapsules composition, the method comprising: preparing biodegradable microcapsules comprising an agrochemical according to the method as hereinbefore described; and suspending the biodegradable microcapsules comprising the agrochemical in an external aqueous phase.

Viewed from another aspect, the present invention provides a biodegradable microcapsules composition obtained by or obtainable by the method as hereinbefore described.

Viewed from another aspect, the present invention provides a biodegradable microcapsules composition comprising the biodegradable microcapsule as hereinbefore described and an external phase.

### DETAILED DESCRIPTION OF THE INVENTION

The present invention is directed to a method for the preparation of biodegradable microcapsules comprising an agrochemical, the method comprising:
(a) forming a suspension of particles comprising one or more plant-based protein(s) in a solvent system, wherein the solvent system comprises miscible co-solvents, wherein a first co-solvent is an organic acid and a second co-solvent is water, and wherein the solids content of the plant-based protein in the suspension is 5 weight-% or more;
(b) reducing the size of the protein particles to d₅₀ of 20 microns or less by volume distribution as determined by laser diffraction;
(c) dispersing an agrochemical in the plant-based protein suspension to form a composition; and either
   (d1) spray-drying the composition to form microcapsules, or
   (d2) dispersing the composition in an immiscible oil to form microcapsules and removing at least part of the oil from the microcapsules.

Any suitable plant-based proteins may be used in the present invention. In preferred methods of the present invention, the plant-based protein(s) each have an amount of less than 50 % non-polar amino acids. The proportion of non-polar amino acids may be determined by analytical methods, such as ISO 13903:2005, which hydrolyses peptides into constituent amino acids by acid or alkaline hydrolysis. Residues detected in such analysis include: tryptophan, methionine, lysine, threonine, alanine, arginine, aspartic acid, glutamic acid, glycine, histidine, isoleucine, leucine, phenylalanine, proline, serine, tyrosine, valine and sum of cystine + cysteine. The percentage of non-polar amino acids is calculated as the sum of the relative abundance of the following residues: glycine, alanine, valine, leucine, isoleucine, methionine, phenylalanine, tryptophan and proline.

In further preferred methods of the present invention, the protein is selected from pea protein, potato protein, soy protein, rapeseed protein, lentil protein, chickpea protein, fava bean protein, mung bean protein, sunflower seed protein, pumpkin seed protein, flax protein, chia protein, canola protein, lupine protein, alfalfa protein, moringa protein and/or rice protein, more preferably pea protein and/or potato protein.

Suitable plant-based proteins further include:
Brassicas: including Brassica balearica: Mallorca cabbage, Brassica carinata: Abyssinian mustard or Abyssinian cabbage, Brassica elongata: elongated mustard, Brassica fruticulosa: Mediterranean cabbage, Brassica hilarionis: St Hilarion cabbage, Brassica juncea: Indian mustard, brown and leaf mustards, Sarepta mustard, Brassica napus: rapeseed, canola, rutabaga, Brassica narinosa: broadbeaked mustard, Brassica nigra: black mustard, Brassica oleracea: kale, cabbage, collard greens, broccoli, cauliflower, kai-lan, Brussels sprouts, kohlrabi, Brassica perviridis: tender green, mustard spinach, Brassica rapa (syn. B. campestris): Chinese cabbage, turnip, rapini, komatsuna, Brassica rupestris: brown mustard, Brassica tournefortii: Asian mustard;
Solanaceae: including tomatoes, potatoes, eggplant, bell and chili peppers;
cereals: including maize, rice, wheat, barley, sorghum, millet, oats, rye, triticale, fonio;
pseudocereals: including amaranth (love-lies-bleeding, red amaranth, prince-of-Wales-feather), breadnut, buckwheat, chia, cockscomb (also called quail grass or soko), pitseed Goosefoot, qañiwa, quinoa and, wattleseed (also called acacia seed);
Legume: including Acacia alata (Winged Wattle), Acacia decipiens, Acacia saligna (commonly known by various names including coojong, golden wreath wattle, orange wattle, blue-leafed wattle), Arachis hypogaea (peanut), Astragalus galegiformis, Cytisus laburnum (the common laburnum, golden chain or golden rain), Cytisus supinus, Dolichios lablab (common names include hyacinth bean, lablab-bean bonavist bean/pea, dolichos bean, seim bean, lablab bean, Egyptian kidney bean, Indian bean, bataw and Australian pea.), Ervum lens (Lentil), Genista tinctorial (common names include dyer's whin, waxen woad and waxen wood), Glycine max (Soybean), Lathyrus clymenum (peavines or vetchlings), Lathyrus odoratus (peavines or vetchlings), Lathyrus staivus (peavines or vetchlings), Lathyrus Silvetris (peavines or vetchlings), Lotus tetragonolobus (asparagus-pea or winged pea), Lupinus albus (Lupin), Lupinus angustifolius (lupin), Lupinus luteus (Lupin), Lupinus polyphyllus (Lupin), Medicago sativa (Alfalfa), Phaseolus aureus (Mung bean), Phaseolus coccineus (Runner bean), Phaseolus nanus (Green bean / French bean), Phaseolus vulgaris (Green bean / French bean), Pisum sativum (pea), Trifolium hybridum (Clover), Trifolium pretense (Red clover), Vicia faba (Broad bean), Vicia sativa (Vetch), Vigna unguiculate (cowpea);
Non-Legumes: including: Acanshosicyos horrida (Acanshosicyos horrida), Aesculus hyppocastanum (Conker tree / Horsechestnut), Anacardium occidentale (Cashew tree), Balanites aegyptica, Bertholletia excels (Brazil nut), Beta vulgaris (Sugar beet), Brassica napus (Rapeseed), Brassica juncea (Brown mustard), Brassica nigra (Black mustard), Brassica hirta (Eurasian mustard), Cannabis sativa (marijuana), Citrullus vulgaris (Sort of watermelon), Citrus aurantiaca (Citrus), Cucurbita maxima (squash), Fagopyrum esculentum (knotweed), Gossypium barbadense (Extra-long staple cotton), Heianthus annuus (sunflower), Nicotiana sp. (Tobacco plant), Prunus avium (cherry), Prunus cerasus (Sour cherry), Prunus domestica (plum), Prunus amygdalus (almond), Ricinus communis (Caster bean/ caster oil plant), Sasamum indicum (Sesame), Sinapis alba (White mustard), Terlfalrea pedata (Oyster nut).

In step (a), the first co-solvent increases solubility of the plant-based protein(s). The first co-solvent may be considered a solubilising co-solvent. There may be one or more solubilising co-solvent(s) and the solubilising co-solvent(s) may fully or partially solubilise the plant-based protein(s).

According to the present invention, the first co-solvent is an organic acid. An organic acid is an organic compound with acidic properties.

Preferably, the organic acid is acetic acid, formic acid, gluconic acid, propionic acid, an α-hydroxy acid and/or a β-hydroxy acid. Preferred α-hydroxy acids include glycolic acid, lactic acid, malic acid, citric acid and/or tartaric acid, preferably lactic acid. Preferred β-hydroxy acid may include β-hydroxypropionic acid, β-hydroxybutyric acid, β-hydroxy β-methylbutyric acid, 2-hydroxybenzoic acid and carnitine. In particularly preferred methods of the present invention, the organic acid is acetic acid and/or lactic acid.

Using an organic acid enables solubilisation of the plant protein and also allows for mild hydrolysis of the protein. For example, without wishing to be bound by theory, the solubility of plant-based proteins in organic acid is possible due to: i) the protonation of proteins and ii) the presence of an anion solvation layer which contributes to a reduction of hydrophobic interactions. Once initially dissolved in organic acid, the protonation of plant-based proteins can help to stabilise them in its non-solvent, for example water.

In step (a), the second co-solvent has decreased solubility of the plant-based protein(s), as compared to the first co-solvent. The second co-solvent may be considered a de-solubilising co-solvent. There may be one or more de-solubilising co-solvent(s).

According to the present invention, the second co-solvent is water.

In preferred methods of the present invention, the solvent system comprises a co-solvent ratio of first co-solvent to second co-solvent of about 5-95% v/v, about 10-90% v/v, about 20-80% v/v, about 20-60% v/v, about 25-55% v/v, about 30-50% v/v, about 20%, about 30%, about 40% about 50% or about 60% v/v, most preferably about 30-50% v/v.

In step (b), the size of the protein particles is reduced to d₅₀ of 20 microns or less by volume distribution as determined by laser diffraction.

In preferred methods of the present invention, in step (b) the protein solution is heated to a first temperature above the sol-gel transition temperature of the one or more plant-based protein(s) solution, then reduced to a second temperature below the sol-gel transition temperature of the one or more plant-based protein(s) solution to form a hydrogel.

As used herein, the term "sol-gel transition temperature" refers to the temperature at which a plant-based protein transforms from a liquid state into a hydrogel state. Thus, at temperatures above the sol-gel transition temperature, the plant-based protein will be in a liquid state, and at temperatures below the sol-gel transition temperature the plant-based protein will be in a hydrogel state.

In preferred methods of the present invention, in step (b) the protein suspension undergoes shear treatment comprising a shear step that involves further reducing the size of the protein particles.

According to the present invention, the shear step may include a "lower shear step" and/or a "higher shear step".

As used herein, the term "lower shear step" may refer to a process step in which low levels of mechanical energy are applied to a material, preferably by a cutting action, to cause it to break primarily into large discrete particles. "Lower shear" does not typically include any milling step that shatters a material by high-speed impact, for example impacts at a differential velocity of greater than 2 ms⁻¹. Nor does it typically include milling processes based on cavitation. In a particular embodiment, during the lower shear step, a suspension is broken up to give particles such that at least 80% by weight of the suspended particles have a maximum dimension as determined by optical microscopy, of between 1 mm and 100 mm.

As used herein, the term "higher shear step" may refer to a process step which applies energy to reduce the suspension to small particles, such as to form e.g. a colloidal dispersion. In a particular embodiment, during the higher shear step, a suspension is broken up to give particles having a particle size d₅₀ as determined by dynamic laser diffraction of less than 20 microns by volume distribution, preferably 0.1 to 15 microns, more preferably 0.2 to 10 microns, most preferably 0.5 to 5 microns. Laser diffraction can be performed according to the methods defined herein.

In preferred methods of the present invention, a high shear step may include sonication or ultrasonication (e.g. using equipment such as a Bandelin HD4200 or a Hielscher UIP1000hdT), high-shear mechanical stirring (e.g. using equipment such as a Silverson rotor-stator high-shear mixer), high pressure homogenisation, or cavitation.

For the avoidance of doubt, a higher shear step subjects the suspension to higher levels of shear than the lower shear step. In the instance the method involves both a lower shear step and a higher shear step, the higher shear step must happen after the lower shear step (i.e. they are discrete steps occurring in this particular order).

Preferred methods of the present invention further comprise a step of altering the pH of the plant-based protein suspension such that it is different to the isoelectric point of the plant-based protein by more than 1 pH unit.

In preferred methods of the present invention, the pH of the emulsion after said step of altering the pH of the emulsion is below the isoelectric point of the plant-based protein by at least 1 pH unit.

Preferably, the step of altering the pH of the plant-based protein suspension is performed either after step (b) or after step (c).

During adjustment of the pH of the plant-based protein suspension, it is possible for the suspension to pass through the isoelectric point of the protein. Due to the lack of charge repulsion at the isoelectric point, the suspended protein particles in the plant-based protein suspension can quickly coagulate. To avoid this, pH modification materials can be used to rapidly change the pH and therefore minimise the time that the suspension is at the isoelectric point.

The isoelectric point of the plant-based protein is defined as the pH at which the charge average of the solution after ionization has a value of zero. The isoelectric point of a particular plant-based protein can be determined using the methods described in Helmick et al., Food Biophysics (2021) 16:474-483. The preferred isoelectric point method is the experimental method described therein, using a zeta potential analyser, as exact values for a given plant protein will vary slightly depending on the plant growing conditions and strain. Alternatively, the computational method described therein can be used.

Thus, in preferred methods of the present invention, the step of altering the pH of the plant-based protein suspension involves adding a pH-modification material to the plant-based protein suspension. Preferably, the pH-modification material is a solution comprising monovalent metal ions, divalent metal ions or ammonium ions, preferably an aqueous alkaline solution comprising monovalent metal ions, divalent metal ions or ammonium ions. More preferably, the pH-modification material is an aqueous hydroxide solution, preferably sodium hydroxide, potassium hydroxide, or ammonium hydroxide.

Preferably, the composition formed in step (c) has a protein solids content in the range 1 weight % to 25 weight % based upon the total weight of the composition, more preferably 2 weight % to 20 weight %, even more preferably 3 weight % to 15 weight %, most preferably 4 weight % to 12 weight %.

In step (c), an agrochemical is dispersed in the plant-based protein suspension to form a composition.

Suitable agrochemicals for use in accordance with the present invention may be solid or liquid at room temperature.

Agrochemicals are substances used in agriculture, forestry, horticulture and gardening either as pesticides to control pest and diseases, or plant growth promoters.

The term pesticide, or plant protection agent, refers to any substance or mixture of substances intended for preventing, destroying, repelling, or mitigating any pest. A pesticide may be a chemical substance or biological agent, termed a biopesticide (such as a virus or bacteria). They are used against pests including insects, plant pathogens, weeds, molluscs, birds, mammals, fish, nematodes (roundworms) and microbes that compete with humans for food, destroy property, spread disease or are a nuisance. Pesticides includes biocides which are substances capable of killing different forms of living organisms. Furthermore. the chemical substance maybe derived by synthetic chemistry processes or alternatively extracted from natural sources, such as plant essential oils or single compounds extracted from essential oils.

Plant growth promoters include plant growth regulators (PGRs), including biological or synthetic or chemical or biological regulators, micronutrients and macronutrients.

In preferred methods of the present invention, the agrochemical is selected from pesticides, including fungicides, herbicides, insecticides, algicides, molluscicides, miticides and rodenticides, and antimicrobials, including germicides, antibiotics, anti-bacterials, antivirals, antifungals, antiprotozoals and anti-parasites, or combinations thereof.

A fungicide is a chemical control of fungi. Fungicides are chemical compounds used to prevent the spread of fungi in gardens and crops. Fungicides are also used to fight fungal infections. Fungicides can either be contact or systemic. A contact fungicide kills fungi when in contact with its surface. A systemic fungicide has to be absorbed by the fungus before the fungus dies.

Examples for suitable fungicides, according to the present invention, encompass the following species: (3-ethoxypropyl)mercury bromide, 2-methoxyethylmercury chloride, 2-phenylphenol, 8-hydroxyquinoline sulphate, 8-phenylmercuri oxyquinoline, acibenzolar, acylamino acid fungicides, acypetacs, aldimorph, aliphatic nitrogen fungicides, allyl alcohol, amide fungicides, ampropylfos, anilazine, anilide fungicides, antibiotic fungicides, aromatic fungicides, aureofungin, azaconazole, azithiram, azoxystrobin, barium polysulphide, benalaxyl-M, benodanil, benomyl, benquinox, bentaluron, benthiavalicarb, benzalkonium chloride, benzamacril, benzamide fungicides, benzamorf, benzanilide fungicides, benzimidazole fungicides, benzimidazole precursor fungicides, benzimidazolylcarbamate fungicides, benzohydroxamic acid, benzothiazole fungicides, bethoxazin, binapacryl, biphenyl, bitertanol, bithionol, blasticidin-S, Bordeaux mixture, boscalid, bridged diphenyl fungicides, bromuconazole, bupirimate, Burgundy mixture, buthiobate, butylamine, calcium polysulphide, captafol, captan, carbamate fungicides, carbamorph, carbanilate fungicides, carbendazim, carboxin, carpropamid, carvone, Cheshunt mixture, chinomethionat, chlobenthiazone, chloraniformethan, chloranil, chlorfenazole, chlorodinitronaphthalene, chloroneb, chloropicrin, chlorothalonil, chlorquinox, chlozolinate, ciclopirox, climbazole, clotrimazole, conazole fungicides, conazole fungicides (imidazoles), conazole fungicides (triazoles), copper(II) acetate, copper(II) carbonate, basic, copper fungicides, copper hydroxide, copper naphthenate, copper oleate, copper oxychloride, copper(II) sulphate, copper sulphate, basic, copper zinc chromate, cresol, cufraneb, cuprobam, cuprous oxide, cyazofamid, cyclafuramid, cyclic dithiocarbamate fungicides, cycloheximide, cyflufenamid, cymoxanil, cypendazole, cyproconazole, cyprodinil, dazomet, DBCP, debacarb, decafentin, dehydroacetic acid, dicarboximide fungicides, dichlofluanid, dichlone, dichlorophen, dichlorophenyl, dicarboximide fungicides, dichlozoline, diclobutrazol, diclocymet, diclomezine, dicloran, diethofencarb, diethyl pyrocarbonate, difenoconazole, diflumetorim, dimethirimol, dimethomorph, dimoxystrobin, diniconazole, dinitrophenol fungicides, dinobuton, dinocap, dinocton, dinopenton, dinosulphon, dinoterbon, diphenylamine, dipyrithione, disulphiram, ditalimfos, dithianon, dithiocarbamate fungicides, DNOC, dodemorph, dodicin, dodine, donatodine, drazoxolon, edifenphos, epoxiconazole, etaconazole,etem, ethaboxam, ethirimol, ethoxyquin, ethylmercury 2,3-dihydroxypropyl mercaptide, ethylmercury acetate, ethylmercury bromide, ethylmercury chloride, ethylmercury phosphate, etridiazole, famoxadone, fenamidone, fenaminosulph, fenapanil, fenarimol, fenbuconazole, fenfuram, fenhexamid, fenitropan, fenoxanil, fenpiclonil, fenpropidin, fenpropimorph, fentin, ferbam, ferimzone, fluazinam, fludioxonil, flumetover, fluopicolide, fluoroimide, fluotrimazole, fluoxastrobin, fluquinconazole, flusilazole, flusulphamide, flutolanil, flutriafol, folpet, formaldehyde, fosetyl, fuberidazole, furalaxyl, furametpyr, furamide fungicides, furanilide fungicides, furcarbanil, furconazole, furconazole-cis, furfural, furmecyclox, furophanate, glyodin, griseofulvin, guazatine, halacrinate, hexachlorobenzene, hexachlorobutadiene, hexachlorophene, hexaconazole, hexylthiofos, hydrargaphen, hymexazol, imazalil, imibenconazole, imidazole fungicides, iminoctadine, inorganic fungicides, inorganic mercury fungicides, iodomethane, ipconazole, iprobenfos, iprodione, iprovalicarb, isoprothiolane, isovaledione, kasugamycin, kresoxim-methyl, lime sulphur, mancopper, mancozeb, maneb, mebenil, mecarbinzid, mepanipyrim, mepronil, mercuric chloride, mercuric oxide, mercurous chloride, mercury fungicides, metalaxyl, metalaxyl-M, metam, metazoxolon, metconazole, methasulphocarb, methfuroxam, methyl bromide, methyl isothiocyanate, methylmercury benzoate, methylmercury dicyandiamide, methylmercury pentachlorophenoxide, metiram, metominostrobin, metrafenone, metsulphovax, milneb, morpholine fungicides, myclobutanil, myclozolin, N-(ethylmercury)-p-toluenesulphonanilide, nabam, natamycin, nitrostyrene, nitrothal-isopropyl, nuarimol, OCH, octhilinone, ofurace, organomercury fungicides, organophosphorus fungicides, organotin fungicides, orysastrobin, oxadixyl, oxathiin fungicides, oxazole fungicides, oxine copper, oxpoconazole, oxycarboxin, pefurazoate, penconazole, pencycuron, pentachlorophenol, penthiopyrad, phenylmercuriurea, phenylmercury acetate, phenylmercury chloride, phenylmercury derivative of pyrocatechol, phenylmercury nitrate, phenylmercury salicylate, phenylsulphamide fungicides, phosdiphen, phthalide, phthalimide fungicides, picoxystrobin, piperalin, polycarbamate, polymeric dithiocarbamate fungicides, polyoxins, polyoxorim, polysulphide fungicides, potassium azide, potassium polysulphide, potassium thiocyanate, probenazole, prochloraz, procymidone, propamocarb, propiconazole, propineb, proquinazid, prothiocarb, prothioconazole, pyracarbolid, pyraclostrobin, pyrazole fungicides, pyrazophos, pyridine fungicides, pyridinitril, pyrifenox, pyrimethanil, pyrimidine fungicides, pyroquilon, pyroxychlor, pyroxyfiir, pyrrole fungicides, quinacetol, quinazamid, quinconazole, quinoline fungicides, quinone fungicides, quinoxaline fungicides, quinoxyfen, quintozene, rabenzazole, salicylanilide, silthiofam, simeconazole, sodium azide, sodium orthophenylphenoxide, sodium pentachlorophenoxide, sodium polysulphide, spiroxamine, streptomycin, strobilurin fungicides, sulphonanilide fungicides, sulphur, sultropen, TCMTB, tebuconazole, tecloftalam, tecnazene, tecoram, tetraconazole, thiabendazole, thiadifluor, thiazole fungicides, thicyofen, thifluzamide, thiocarbamate fungicides, thiochlorfenphim, thiomersal, thiophanate, thiophanate-methyl, thiophene fungicides, thioquinox, thiram, tiadinil, tioxymid, tivedo, tolclofos-methyl, tolnaftate, tolylfluanid, tolylmercury acetate, triadimefon, triadimenol, triamiphos, triarimol, triazbutil, triazine fungicides, triazole fungicides, triazoxide, tributyltin oxide, trichlamide, tricyclazole, trifloxystrobin, triflumizole, triforine, triticonazole, unclassified fungicides, undecylenic acid, uniconazole, urea fungicides, validamycin, valinamide fungicides, vinclozolin, zarilamid, zinc naphthenate, zineb, ziram, zoxamide, and mixtures thereof.

An herbicide is a pesticide used to kill unwanted plants, also termed weeds. Selective herbicides kill specific targets while leaving the desired crop relatively unharmed. Some of these act by interfering with the growth of the weed and are often based on plant hormones. Herbicides used to clear waste ground are non-selective and kill all plant material with which they come into contact. Herbicides are widely used in agriculture and in landscape turf management. They are applied in total vegetation control (TVC) programs for maintenance of highways and railroads. Smaller quantities are used in forestry, pasture systems, and management of areas set aside as wildlife habitat.

Suitable herbicides may be selected from the group comprising: aryloxycarboxylic acid e.g. MCPA, aryloxyphenoxypropionates e.g. clodinafop, cyclohexanedione oximes e.g. sethoxydim, hydroxybenzonitriles e.g. bromoxynil, sulphonylureas e.g. nicosulphuron, triazolopyrimidines e.g. penoxsulam, triketiones e.g. mesotriones, triazine herbicides such as metribuzin, hexaxinone, or atrazine; sulphonylurea herbicides such as chlorsulfuron; uracils such as lenacil, bromacil, or terbacil; urea herbicides such as linuron, diuron, siduron, or neburon; acetanilide herbicides such as alachlor, or metolachlor; thiocarbamate herbicides such as benthiocarb, triallate; oxadiazolone herbicides such as oxadiazon; isoxazolidone herbicides, phenoxyacetic acids; diphenyl ether herbicides such as fluazifop, acifluorfen, bifenox, or oxyfluorfen; dinitro aniline herbicides such as trifluralin; organophosphonate herbicides such as glufosinate salts and esters and glyphosate salts and esters; and/or dihalobenzonitrile herbicides such as bromoxynil, or ioxynil, benzoic acid herbicides, dipyridilium herbicides such as paraquat; and other herbicides such as clomazone, carfentrazone, saflufenacil, cinmethylin and pyroxasulphone. Particularly preferred herbicides may be selected from 2,4-dichlorophenoxyacetic acid (2,4-D), atrazine, cinmethylin, dicamba as benzoic acid, glyphosate, glufosinate, imazapic as imidazolinone, metolachlor as chloroacetamide, picloram, clopyralid, and triclopyr as pyridinecarboxylic acids or synthetic auxins, their respective water soluble salts and esters, and mixtures thereof.

An insecticide is a pesticide used against insects in all developmental forms, and include ovicides and larvicides used against the eggs and larvae of insects. Insecticides are used in agriculture, medicine, industry and the household.

Suitable insecticides may include those selected from: chlorinated insecticides such as, for example, Camphechlor, DDT, Hexachloro- cyclohexane, gamma-Hexachlorocyclohexane, Methoxychlor, Pentachlorophenol, TDE, Aldrin, Chlordane, Chlordecone, Dieldrin, Endosulphan, Endrin, Heptachlor, Mirex and their mixtures; organophosphorous compounds such as, for example, Acephate, Azinphos-methyl, Bensulide, Chlorethoxyfos, Chlorpyrifos, Chlorpyriphos-methyl, Diazinon, Dichlorvos (DDVP), Dicrotophos, Dimethoate, Disulphoton, Ethoprop, Fenamiphos, Fenitrothion, Fenthion, Fosthiazate, Malathion, Methamidophos, Methidathion, Methyl-parathion, Mevinphos, Naled, Omethoate, Oxydemeton-methyl, Parathion, Phorate, Phosalone, Phosmet, Phostebupirim, Pirimiphos-methyl, Profenofos, Terbufos, Tetrachlorvinphos, Tribufos, Trichlorfon and their mixture; carbamates such as, for example, Aldicarb, Carbofuran, Carbaryl, Methomyl, 2-(I- Methylpropyl)phenyl methylcarbamate and their mixtures; pyrethroids such as, for example, Allethrin, Bifenthrin, Deltamethrin, Permethrin, Resmethrin, Sumithrin, Tetramethrin, Tralomethrin, Transfluthrin and their mixtures; plant toxin derived compounds such as, for example, Derris (rotenone), Pyrethrum, Neem (Azadirachtin), Nicotine, Caffeine and their mixture; neonicotinoids such as imidacloprid; abamectin e.g. emamactin; oxadiazines such as indoxacarb; and/or anthranilic diamides such as rynaxypyr.

Miticides are pesticides that kill mites. Antibiotic miticides, carbamate miticides, formamidine miticides, mite growth regulators, organochlorine, permethrin and organophosphate miticides all belong to this category. Molluscicides are pesticides used to control molluscs, such as moths, slugs and snails. These substances include metaldehyde, methiocarb and aluminium sulphate. A nematicide is a type of chemical pesticide used to kill parasitic nematodes (a phylum of worm).

Agrochemicals also include plant growth regulators (PGRs). PGRs are synthetic or biological compounds used to modify plant growth such as increasing branching, suppressing shoot growth, increasing return bloom, removing excess fruit, or altering fruit maturity. They can be grouped into five classes: compounds related to auxins, gibberellins and inhibitors of gibberellin biosynthesis, cytokinins, abscisic acid and compounds affecting the ethylene status.

Agrochemicals also comprise nutrients. The composition may comprise at least one nutrient. Nutrients refer to chemical elements and compounds which are desired or necessary to promote or improve plant growth. Nutrients generally are described as macronutrients or micronutrients.

Micronutrients typically refer to trace metals or trace elements, and are often applied in lower doses. Suitable micronutrients include trace elements selected from zinc, boron, chlorine, copper, iron, molybdenum, and manganese.

The micronutrients may be in a soluble form or be included as insoluble solids, and may in the form of salts or chelates. Preferably, the micronutrient is in the form of a carbonate or oxide. Preferably, the micronutrient may be selected from zinc, calcium, molybdenum or manganese, or magnesium. Particularly preferred micronutrients for use with the present invention may be selected from zinc oxide, manganese carbonate, manganese oxide, or calcium carbonate.

Macronutrients typically refer to those comprising nitrogen, phosphorus, and potassium, and include fertilisers such as ammonium sulphate, and water conditioning agents. Suitable macronutrients include fertilisers and other nitrogen, phosphorus, or sulphur containing compounds, and water conditioning agents.

Suitable fertilisers include inorganic fertilisers that provide nutrients such as nitrogen, phosphorus, potassium or sulphur. Examples of such fertilisers include:
for nitrogen as the nutrient: nitrates and or ammonium salts such as ammonium nitrate, including in combination with urea e.g. calcium ammonium nitrate, ammonium sulphate nitrate, ammonium phosphates, particularly mono-ammonium phosphate, di-ammonium phosphate and ammonium polyphosphate, ammonium sulphate, and the less commonly used calcium nitrate, sodium nitrate, potassium nitrate and ammonium chloride;
for phosphorus as the nutrient: acidic forms of phosphorus such as phosphoric, pyrophosphoric or polyphosphoric acids, but more usually salt forms such as ammonium phosphates, particularly mono-ammonium phosphate, di-ammonium phosphate, and ammonium polyphosphate, potassium phosphates, particularly potassium dihydrogen phosphate and potassium polyphosphate;
for sulphur as the nutrient: ammonium sulphate and potassium sulphate, e.g. the mixed sulphate with magnesium.

The microcapsules may comprise at least one micronutrient and/or at least one macronutrient.

The use of some of the above described agrochemicals from synthetic origin, and the resulting presence of their residues in food and water, are leading to health safety concerns. Moreover, the use of chemical pesticides affects the environment and the biodiversity. The constant and sometimes inadequate use of chemical pesticides is also responsible for the development of pathogen resistances leading to possible food safety issues.

Today, the demand for a reduction of agrochemicals, and for the development of alternative ways to protect crops from pathogens and pests, is growing. In response, research and development in the field of biopesticides has grown exponentially in the last 20 years.

Biopesticides include microorganisms that may be selected from bacteria, cyanobacteria, micro-algae, fungi, viruses, nematodes, protozoa, and yeast in any combination, where such microorganisms are capable of killing undesired living organisms. These microorganisms may be in a dormant or inactivated form or as spores. The microcapsules of this invention may include Bacillus thuringiensi, Bacillus thuringiensis var. kurstaki (Bt), B. thuringien, Bacillus thuringiensis var. tenebrionid, Bacillus thuringiensis var. aizawai, Bacillus thuringiensis japonensis, Bacillus popilliae, Bacillus lentimorbus, Bacillus sphaericus, Bacillus pumilus, Bacillus subtilis, Bacillus firmus, Burkholderia cepacia, Bacillus amyloliquefaciens, Bacillus licheniformis, Erwinia amylovora, Pasteuria penetrans, Pasteuria usage, Psedomonas spp., Streptomyces griseoviridis and Xanthomonas campestris pv. Poannua. and such microorganisms as given in Kumar, J., Ramlal, A., Mallick, D. and Mishra, V. An Overview of Some Biopesticides and Their Importance in Plant Protection for Commercial Acceptance. Plants 2021, 10, 1185.

Among the natural alternatives to chemical pesticides, products based on plant extracts and/or plant essential oils (EOs) have received increasing attention because of their generally recognized as safe (GRAS) compounds, due to their very low human toxicity, high volatility, and rapid degradation.

Microcapsules of this invention, wherein the agrochemical is a biopesticide, EO or EO components, are suitable for use in agrochemical formulations than can be used for plant production that can be certified as organic by organisations such as the USDA (US Department of Agriculture) or Ecocert in Europe.

Essential oils possess a strong odour and are produced by aromatic plants as secondary metabolites. They are usually obtained from several plant parts by steam distillation. They are made of a mixture of volatile compounds (between 20 and 100), even if they are, in most cases, characterized by two or three main compounds, representing the major part of the EO (20-70%). As an example, EO of *Citrus limon* is composed, in majority, of limonene and β-pinene. EOs can be composed of molecules of many chemical functionalities such as terpenes and terpenoids (e.g. limonene, linalool); and aromatic and aliphatic molecules (e.g. cinnamaldehyde, safrole). These components are characterized by a low molecular weight and therefore high volatility and fast evaporation. They are also generally very sensitive oxygen and light. This makes it difficult to apply them to crops and fields directly as an agrochemical and therefore encapsulation that releases the EO or its components gradually is advantageous.

Essential oils were known, for a long time, for their antimicrobial and medicinal properties. The latter have, among others, led to the development of aromatherapy, where they are used as bactericide (e.g., tea tree and cinnamon EOs), fungicide (*Lavandula spica* EO), or virucides (*Cinnamomum camphora*).

In the last 20 years, the antibacterial and antifungal properties of essential oils have been assessed against a large variety of plant pathogens in order to determine their potential as alternative plant protection products (see e.g. Baser, K.H.C.; Buchbauer, G.'s Handbook of Essential Oils, 3rd ed.; CRC Press: Boca Raton, FL, USA, 2020, Chapter 24 provides an overview of the use of EOs in agriculture.

The complex composition of essential oils is interesting, as they could act as multisite chemicals, lowering the risk of resistance. Alternatively, the antibacterial and antifungal properties can be achieved by extracting major components from the EOs and using a single natural active or a simple mixture of a few natural components. For example, Thymus vulgaris EO main component is thymol and for Rosmarinus officinalis EO it is cineole. These single components can be extracted for use as agricultural actives.

In preferred methods of the present invention, the agrochemical is an essential oil of natural origin and is selected from the following list of natural plant sources: Abies alba, Abies balsamea, Abies sibirica, Allium sativun, Amyris balsamifera, Anethum graveolens, Aniba rosaeodora var. Amazonica, Apium graveolens var. Dulce, Canarium luzonicum, Carum carvi, Cedrus atlantica, Cedrus deodara, Cinnamomum camphora, Cinnamomum cassia, Cinnamomum zeylanicum, Cinnamosma fragrans, Citrus aurantifolia, Citrus aurantium, Citrus bergamia, Citrus limon, Citrus paradisi, Citrus reticulata, Citrus sinensis, Copaifera officinalis, Coriandrum sativum, Corydothymus capitatus, Cuminum cymincum, Cupressus sempervirens var. Stricta, Cymbopogon citratus, Cymbopogon flexuosus, Cymbopogon giganteus, Cymbopogon martini var. Motia, Cymbopogon nardus, Cymbopogon winterianus, Eucalyptus citriodora, Eucalyptus dives, Eucalyptus globulus, Eucalyptus radiata, Eucalyptus smithii, Eugenia caryophyllus, Foeniculum vulgare, Fokienia hodginsii, Gaultheria fragrantissima, Illicum verum, Juniperus virgiana, Laurus nobilis, Lavendula angustifolia, Lavendula x burnatii clone grosso, Leptospermum petersonii, Litsea citrata, Melaleuca alternifolia, Melaleuca cajputii, Melaleuca quinquenervia, Mentha arvensis, Mentha pulegium, Mentha x citrata, Mentha x piperita, Monarda fistulosa, Myristica fragrans, Myrtus communis, Myrtus communis, Ocimum basilicum, Ocimum sanctum, Origanum compactum, Origanum heracleoticum, Origanum majorana, Pelargonium x asperum, Pimenta racemosa, Pimpinella anisum, Pinus pinaster, Pinus pinaster térébenthine, Pinus sylvestris, Piper nigrum, Rosmarinus officinalis, Salvia lanvandulifolia, Salvia officinalis, Satureja hortensis, Satureja montana, Styrax benzoe, Thuya occidentalis, Thymus mastichina, Thymus satureioides, Thymus vulgaris, Trachyspermum amni, Vanilla fragrans Auct, Vetiveria zizanoides, Zingiber officinale.

In addition, other Essential Oils with known effects as agrochemicals can be found in Chang Y, Harmon PF, Treadwell DD, Carrillo D, Sarkhosh A and Brecht JK (2022) Biocontrol Potential of Essential Oils in Organic Horticulture Systems: From Farm to Fork. Front. Nutr. 8:805138. Table 1 provides examples of EOs acting against phytopathogenic fungi/oomycetes, Table 2 provides examples of EO acting against phytopathogenic bacteria and Table 4 provides examples of EOs presenting herbicidal properties.

In preferred methods of the present invention, the main component of Essential Oils maybe extracted from the EOs and then encapsulated. These components may include borneol, camphor, carvacrol, β-caryophyllene, camphene, cinnamaldehyde, cineol, α-curcumene, β-cymene, diallyl di and tri-sulphide, eucalyptol, eugenol, eugenyl acetate, geranial, α-humelene, limonene, myrcene, neral, α-pinene, γ-pinene, γ-terpinene, terpinolene, α-thujone, thymol, and vanillin.

In preferred methods of the present invention, the agrochemical is dispersed in a carrier phase. Preferably, the carrier phase is a solvent, a fat, a wax or a microbial growth media.

In preferred methods of the present invention, the carrier phase is a solvent.

Preferably, the solvent is a solvent with low volatility (e.g. having a vapour pressure of less than 0.1 Torr at 25°C, preferably less than 0.01 Torr at 25°C, preferably less than 0.001 Torr at 25°C).

Preferably, the solvent has low or no odour.

Preferably, the solvent has at least two Hansen solubility parameters selected from: an atomic dispersion force (δD) of less than 20, a dipole moment (δP) of less than 8, and a hydrogen bonding (δH) of less than 11. More preferably, the solvent has at least two Hansen solubility parameters selected from: an atomic dispersion force (δD) of less than 20, a dipole moment (δP) of less than 4, and a hydrogen bonding (δH) of less than 5.

Preferably, the solvent has a density of greater than 1.07g/cm³. Solvents having this property are advantageously able to prevent creaming of the microcapsules (e.g. in a final product formulation).

Preferably, the solvent contains only low levels of materials with an alcohol functionality (e.g. a primary alcohol functionality). In preferred methods of the present invention, the solvent comprises less than 40 %wt alcohol-containing material based upon the total weight of the solvent, more preferably less than 20 %wt. In particularly preferred methods of the present invention, the solvent does not comprise an alcohol-containing material.

In preferred methods of the present invention, the carrier phase is a solvent selected from a carboxylic acid ester, a fatty acid ester, a phthalate ester, a triol, a diol, a rosin resin, an isoparaffin, a terpene, and a vegetable oil, or combinations thereof.

Preferably, the solvent is selected from Miglyol^{®} 840, Miglyol^{®} 812 N, Miglyol^{®} 829, Miglyol^{®} 829 ECO, Miglyol^{®} Coco 810, Miglyol^{®} 810 N, Miglyol^{®} 128, Miglyol^{®} 808, Miglyol^{®} T-C7, Miglyol^{®} 8810, Miglyol^{®} PPG 810, Miglyol^{®} OE, Miglyol^{®} DO, and Miglyol^{®} 818, Abalyn^{®}, limonene, benzyl benzoate, diethyl phthalate, isopropyl myristate, triethyl citrate, dipropylene glycol, and propylene glycol, triacetin, glycerin, 1,3 propanediol or combinations thereof, preferably Miglyol^{®} 812 N.

Preferably, the solvent is a vegetable oil selected from coconut oil, corn oil, canola oil, cottonseed oil, olive oil, palm oil, peanut oil, rapeseed oil, safflower oil, sesame oil, soybean oil, and sunflower oil. Other examples of vegetable oils are given in the CTFA Cosmetic Ingredient Handbook, J.M. Nikitakis (ed.), 1st ed., The Cosmetic, Toiletry and Fragrance Association, Inc., Washington, 1988. A vegetable oil is an oil that comes from plant sources. Alternatively, the solvent is derived from a vegetable oil.

In preferred methods of the present invention, the carrier phase is a fat or wax having a melting point of less than 60°C, preferably less than 45°C, preferably less than 25°C.

Preferably, the wax is selected from Softisan^{®} 100, Softisan^{®} 142, and Softisan^{®} 154, or combinations thereof, preferably Softisan^{®} 100.

In preferred methods of the present invention, the carrier phase is a microbial growth media, such as lysogeny broth (LB), minimal synthetic defined (SD) media or M9 minimal media.

Preferred methods of the present invention may further comprise subjecting the microcapsules to a post-treatment step. Preferably, the post-treatment step comprises a non-covalent cross-linking step, a covalent cross-linking step or a coating formation step.

In preferred methods of the present invention, the post-treatment step comprises a non-covalent cross-linking step. Preferably, the non-covalent cross-linking step comprises treating the microcapsules with a non-covalent cross linker selected from sodium tripolyphosphate (NaTPP), sodium hexametaphosphate, and phenolic compounds (e.g. tannic acid, caffeic acid etc.).

In preferred methods of the present invention, the post-treatment step comprises a covalent cross-linking step. Preferably, the covalent cross-linking step comprises treating the microcapsules with a covalent cross linker selected from genipin, epoxy compounds, glyceraldehyde, glutaraldehyde, formaldehyde, glyoxal, dialdehyde starch, microbial transglutaminase, and polyamide based crosslinking resin (e. g. PolyCup^{®}), or combinations thereof.

In preferred methods of the present invention, the post-treatment step comprises a coating formation step.

In preferred methods of the present invention, the coating formation step comprises subjecting the microcapsules to a complex coacervation step using a polysaccharide. Preferably, the polysaccharide is selected from xanthan gum, gellan gum, and chitosan, or combinations thereof.

In preferred methods of the present invention, the coating formation step comprises treating the microcapsules with an aqueous mineral solution to form a mineral coating. Preferably, the aqueous mineral solution comprises iron salts, calcium salts, phosphate salts, carbonate salts, titanium salts or zinc salts, or combinations thereof.

As will be understood by a skilled person, it is possible for multiple post-treatment steps to be performed. For example, in a preferred method of the present invention, the microcapsules are subjected to a non-covalent cross-linking step (e.g. using NaTPP) followed by a coating formation step (e.g. using chitosan), and optionally a further non-covalent cross-linking step (e.g. using NaTPP).

The present invention also provides biodegradable microcapsules comprising an agrochemical obtained by or obtainable by the method as hereinbefore described.

The present invention also provides a method for the preparation of a biodegradable microcapsules composition, the method comprising:
- preparing biodegradable microcapsules comprising an agrochemical according to the method as hereinbefore described; and
- suspending the biodegradable microcapsules comprising the agrochemical in an external aqueous phase.

Preferably, the external phase is an external aqueous phase, preferably hard water with a total hardness of at least 40 mg/L CaCO₃, or an acidic buffer solution with a pH of between 4.0 and 5.5.

Preferred methods of the present invention further comprise adding a suspending agent(s) to the external phase.

Preferably, the suspending agent(s) is selected from acacia gum, alginic acid, pectin, xanthan gum, gellan gum, carbomer, dextrin, gelatin, guar gum, hydrogenated vegetable oil category 1, aluminum magnesium silicate, maltodextrin, carboxymethyl cellulose, polymethacrylate, poly vinyl pyrrolidone, sodium alginate, starch, zein, water-insoluble cross-linked polymers such as cross-linked cellulose, cross-linked starch, cross-linked CMC, cross-linked carboxymethyl starch, cross-linked polyacrylate, and cross-linked polyvinylpyrrolidone, and expanded clays such as bentonite and laponite.

The biodegradable microcapsules composition may also comprise preservatives and/or anti-microbials such as organic acids, or their esters or salts such as ascorbic e.g. ascorbyl palmitate, sorbic e.g. potassium sorbate, benzoic e.g. benzoic acid and methyl and propyl 4-hydroxybenzoate, propionic e.g. sodium propionate, phenol e.g. sodium 2-phenylphenate; 1,2- benzisothiazolin-3-one; or formaldehyde as such or as paraformaldehyde; or inorganic materials such as sulphurous acid and its salts, typically in amounts of 0.01 wt.% to 1 wt.% of the formulation.

The biodegradable microcapsules composition may comprise a dye or pigment in combination with an agrochemical. Examples of suitable dyes include: anthraquinone, triphenylmethane, phthalocyanine and derivatives thereof, and diazonium salts. Pigment dispersions can contain pigments such as pigment red 112 (CAS No. 6535-46-2), pigment red 2 (CAS No. 6041-94-7), pigment red 48:2 (CAS No. 7023-61-2), pigment blue 15:3 (CAS No. 147-14-8), pigment green 36 (CAS No. 14302-13-7), pigment green 7 (CAS No. 1328-53-6), pigment yellow 74 (CAS No. 6358-31-2), pigment orange 5 (CAS No. 3468-63-1), pigment violet 23 (CAS No. 6358-30-1), pigment black 7 (CAS No. 97793-37-8), and pigment white 6 (CAS No. 98084-96-9).

Examples of suitable effect pigments include pearlescent pigment in different particle sizes. Effect pigments having a particle size of 15 µm or less, or a particle size of 60 µm or less are commonly used. The particle size of the effect pigments is normally not more than 200 µm, preferably not more than 100 µm. Usually, the particle size of the effect pigment is 1 µm or more. Another effect pigment can be aluminium.

The present invention also provides a biodegradable microcapsules composition obtained by or obtainable by the method as hereinbefore described.

Low solubility is highly desirable so as to maintain the structural integrity of the microcapsules when they are added to water to make an aqueous composition for use or if it were to rain immediately after the microcapsules are applied to the field or crop.

Protein solubility is determined using the following protocol: a known amount of microcapsules is added to an aqueous solution, which is then centrifuged to separate the soluble and insoluble fractions. After centrifugation, the liquid supernatant (i.e. the soluble fraction) is removed without obtaining any of the solids that precipitate at the bottom (i.e. the insoluble fraction). The resultant supernatant is analysed for nitrogen content. Protein content in the supernatant is then calculated based on nitrogen content using the factor of 6.25. Protein solubility is defined as the amount of protein in the supernatant divided by the amount of protein in the whole aqueous solution.

In preferred biodegradable microcapsules of the present invention, the plant-based protein(s) encapsulating the agrochemical is selected from soy protein, pea protein, potato protein, rapeseed protein, lentil protein, chickpea protein, fava bean protein, mung bean protein, sunflower seed protein, pumpkin seed protein, flax protein, chia protein, canola protein, lupine protein, alfalfa protein, moringa protein and/or rice protein, preferably pea protein and/or potato protein.

In preferred biodegradable microcapsules of the present invention, the plant-based protein(s) encapsulating the agrochemical has been pre-treated with an organic acid. Preferably, the organic acid is acetic acid, formic acid, propionic acid, an α-hydroxy acid and/or a β-hydroxy acid. Particularly preferably, the organic acid is acetic acid and/or lactic acid.

In preferred biodegradable microcapsules of the present invention, the plant-based protein(s) encapsulating the agrochemical have a protein secondary structure with at least 40% intermolecular β-sheet, at least 50% intermolecular β-sheet, at least 60% intermolecular β-sheet, at least 70% intermolecular β-sheet, at least 80% intermolecular β-sheet, or at least 90% intermolecular β-sheet, wherein the % intermolecular β-sheet content is measured by FTIR.

In preferred biodegradable microcapsules of the present invention, the plant-based protein(s) encapsulating the agrochemical is selected from pea protein and soy protein, and the agrochemical is selected from essential oils and components of essential oils.

In preferred biodegradable microcapsules of the present invention, the agrochemical is dispersed in a carrier phase.

In preferred biodegradable microcapsules of the present invention, the plant-based protein encapsulating the agrochemical has been non-covalently modified by a non-covalent cross-linker or the plant-based protein has been covalently modified by a covalent cross-linker or the plant-based protein has a coating deposited thereon.

The present invention also provides a biodegradable microcapsules composition comprising the biodegradable microcapsules as hereinbefore described and an external phase.

Preferably, the external phase is an external aqueous phase, preferably hard water with a total hardness of at least 40 mg/L CaCO₃, or an acidic buffer solution with a pH of between 4.0 and 5.5.

The biodegradation of the plant-protein microcapsules shell occurs readily in the presence of enzymes, specifically proteases. Most soil microorganisms, including bacteria and fungi, produce proteases in order to recycle soil organic matter by cleaving cell wall proteins. These enzymes, such as Streptomyces griseus, are readily found in the soil (see Vranova, V., Rejsek, K., Formeanek, P. (2013)). Proteolytic activity in soil: A Review, Applied Soil Ecology, 70, p. 23-32). These proteases similarly cleave the microcapsules protein shell releasing the active over days and weeks. The in-vitro rate of release of the active can be measured when specific microorganisms are added to a buffered slurry of the microcapsules and incubated.

The microcapsules biodegradation can be demonstrated in a standard aerobic soil biodegradation test, ISO 17556:2019. Empty powdered microcapsules, with only shell material and no active ingredient, are prepared via spray drying. The shell is then incubated with soil as the inoculum, in dark or diffuse light, at constant temperature preferably between 20 and 25°C. The water holding capacity, pH and organic-matter content of the soil is measured and controlled. The ratio of carbon in the sample to nitrogen in soil is also controlled. Soil biodegradation is measured as the production of carbon dioxide and/or oxygen demand in a respirameter. The level of biodegradation is expressed as a percentage by comparing the amount of oxygen consumed with the theoretical oxygen demand or by comparing the amount of carbon dioxide evolved with the theoretical amount. The biodegradation is measured at regular intervals and the test is continued until there is a constant level of biodegradation or up to 6 months. A reference material is also tested and for the test to be valid its biodegradation needs to be more than 60% at the plateau phase or at the end of the test.

### BRIEF DESCRIPTION OF THE FIGURES

Figure 1a shows the intact multicore microcapsules at x20 magnification of Example 2a after 7 days in the incubator.
Figure 1b shows the broken microcapsules and protein aggregates at x20 magnification of Example 2b after 7 days in the incubator.
Figure 2 shows the microcapsule shell's soil biodegradation profile.

### EXAMPLES

### Materials

- Pea protein isolate (80 weight % protein, 4 weight % carbohydrate) (ProEarth P16109) was purchased from Cambridge Commodities Ltd, UK. Isoelectric point measured as 4.5 using zeta potential analyser method described in reference cited hereinbefore.
- Glacial acetic acid was purchased from Fisher Scientific, UK
- Lactic acid 85% was purchased from Sigma-Aldrich Gillingham, UK
- Thymol was purchased from Fisher Scientific, UK
- Miglyol^{®} 812N was purchased from IOI Oleochemicals, Germany
- Miglyol^{®} 840 was purchased from IOI Oleochemicals, Germany
- Polyglycerol polyricinoleate (PGPR) was purchased from Danisco, Denmark
- Maltodextrin was purchased from Sigma-Aldrich Gillingham, UK
- Polysorbate 80 was purchase from Sigma-Aldrich Gillingham, UK
- Potassium hydroxide was purchased from Sigma-Aldrich Gillingham, UK
- Ethanol was purchased from Fisher Scientific, UK
- Streptomyces griseus (Type XIV, ≥3.5 units/mg solid, powder) was purchased from Sigma-Aldrich Gillingham, UK
- All components for Phosphate buffered saline (PBS) (pH 7.4) were purchased from Fisher Scientific, UK, and were prepared in the following ratios: 138 mM NaCl, 2.7 mM KCI, 10 mM Na₂HPO₄, 2 mM NaH₂PO₄
- Sodium acetate trihydrate was purchased from Alfar Aesar, UK
- Calcium chloride dihydrate was purchased from Fisher Scientific, UK
- Methylparaben was purchased from Alfar Aesar, UK

### Methods

### Total thymol loading

Thymol levels in the microcapsules was determined by extraction of the thymol and injection into a Gas Chromatography (GC) column. Quantification was achieved by use of a calibration curve for the thymol diluted in ethanol.

To measure the total level of thymol in a microcapsules sample, the capsules were first broken by sonication. For example, 10-50 mg of dried microcapsules was added to 3.0 g of deionised (DI) water and 10% KOH and then vortexed to mix thoroughly. The solution was then sonicated with a Bandelin Sonopuls HD4200, small probe TS104 for 1 minute at 30% amplitude (around 1.5 kJ in total). While sonicating, ice was used to keep the temperature below 20 °C to avoid any loss of thymol through evaporation. An optical microscope was used to check visually if the capsules were fully broken. If not, the sonication step was repeated. Ethanol was added to the mixture, which was then mixed and centrifuged. The supernatant was collected and retained as the first extraction. The residue was mixed with ethanol and centrifuged. The supernatant was collected and added to the first extraction. This mixture was then diluted as appropriate and injected into the GC for analysis.

### Slurry solids content

The solids content of the protein slurry was measured by the mass remaining on drying. Approximately 5g of the slurry was pipetted into a small polypropylene dish and the mass was accurately recorded. The dish was placed in a 40°C oven overnight to dry. The dry mass was measured immediately after removing the dish from the oven and the solids content of the protein slurry was calculated as a percentage of the initial wet mass.

### Slurry particle size

The particle size of the slurry particles was measured by laser diffraction. For most slurries this was carried out with an Anton Paar laser diffraction particle size analyser PSA 1190. Measurements were carried out by diluting the slurry within 1 h of finishing manufacturing in an aqueous solution with acetic acid or lactic acid adjusted to the same pH. The test material was diluted to the required concentration to ensure there are no agglomerate present and have the desired optical density (normally 5-15% obscuration) for the measurement. The d₅₀ quoted is for the volume distribution, as calculated via a general analysis using Mie theory.

For samples with a high concentration of acid the PSA 1190 equipment was not compatible. In such circumstance alternative laser diffraction equipment such as a Malvern Pananalytical Mastersizer 3000E could be used. When such equipment was not available the particle size in high acid slurries was measured using a Malvern Pananalytical Zetasizer which uses Dynamic Light Scattering, DLS. This method is comparable to the laser diffraction methods. Measurements were carried out by diluting the high lactic acid dispersion while still hot from sonication treatment with 35% w/v lactic acid at 80°C. The test material was diluted to the required concentration in hot diluent to prevent protein gelling and to have the desired optical density (0.1 to 1% w/v) for the measurement. The d₅₀ quoted is for the volume distribution, as calculated via a general analysis using Mie theory.

### Slurry pH

Slurry pH was measured undiluted using a calibrated Mettler Toledo FiveEasy F20 according to the equipment supplier's instructions.

### Viscosity of composition for spray-drying

The viscosity of the compositions for spray drying were measured using an Anton Paar MCR 92 rheometer, within 1 h of finishing manufacturing the composition. The rheometer was set up using a cone (1 degree, 50mm diameter) and plate geometry. The viscosity was measured at a temperature of 20°C and a shear rate of 50/s.

### Microcapsule particle size

The particle size of the final microcapsule was measured using an Anton Paar laser diffraction particle size analyser PSA 1190. If the microcapsule was available as a powder was added to reverse osmosis water diluted to the required concentration in order to have the desired optical density (normally 5-15% obscuration) for the measurement. The dispersion should be checked via an optical microscope for any larger agglomerates of microcapsules. If these are visible 0.5 weight % acetic acid can be added to ensure that the primary particles are well dispersed. The d₅₀ quoted is for the volume distribution, as calculated via a general analysis using Mie theory.

Alternatively, particle size can be measured using optical microscopy (e.g. using an open Frame microscope equipped with a CellCam 200CR camera, Aura Pro phase contrast illuminator and universal plan fluorite objectives at 4x, 10x and 20x). The microcapsule powder is added to either reverse osmosis water or single strength buffer as needed. In such a method, particle sizes are taken from the mean size measurements of 50 microcapsules, for each respective sample. The optical microscope is then calibrated using the grid of a Hirschmann counting chamber, (Fuchs Rosenthal). Using the straight line tool in ImageJ 1.53, particle diameters are measured from two center-edges with the overlay-text feature enabled to avoid repeating capsules.

### Optical Microscopy

Optical microscopy images were obtained using an open Frame microscope equipped with a CellCam 200CR camera, Aura Pro phase contrast illuminator and universal plan fluorite objectives at 4x, 10x and 20x. Samples were prepared for optical microscopy by adding dried microcapsules to reverse osmosis water. A cover slip was then placed on the top of the sample, and images were taken.

### Example 1: Thymol microcapsules preparation

### Preparation of a protein hydrogel

Reverse osmosis (RO) water (1120 g) was added to a 2-litre stainless steel container, and 216 g of pea protein isolate was added. The container was placed in a 92 °C water bath and mixed with an overhead stirrer at 1500 rpm. After stirring for 3 minutes, glacial acetic acid (480 g) was added. The mixture was stirred for 15 minutes at 1500 rpm, then for 30 minutes at 1200 rpm, ensuring that the temperature of the mix surpassed 85 °C for at least 10 minutes. The mixture was poured into trays to a depth of approximately 10 mm, and left at room temperature overnight.

Shear was then applied to the hydrogel as follows. The protein hydrogel was cut into ~1cm cubes via a low-shear cutting step. The cubes were split between two 75 micron filter bags, which were each then submerged inside a bucket containing 16L of RO water. This formed a coarse protein hydrogel slurry within the filter bag. The hydrogel cubes were left to soak, with agitation from an overhead stirrer at 600-800 rpm, for 90-150 min. This step was performed to reduce the concentration of acetic acid in the hydrogel by diffusion to the continuous aqueous phase. The pH of the wash water was then measured, and if it was above 3.2, soaking was continued for a further 30 minutes. If it was below 2.9, half of the water was drained and replaced with fresh RO water, then soaking was continued for a further 30 minutes. The filter bag was then suspended above the bucket to drain for 5 minutes. The washed gel from both filter bags was transferred to a 5 liter beaker, and homogenized with a Silverson mixer at 5000 rpm for 5 minutes, 6000 rpm for 5 minutes, and 7000 rpm for 5 minutes. The smooth slurry was then transferred to 1 L Nalgene bottles (800 g in each), and exposed to high shear ultrasonication (Hielscher UP500Hdt) with cooling on ice, until 250 kJ had been applied, with shaking every 75 kJ. The hydrogel slurry was then passed through a 200 micron sieve before use. pH was measured as 3.0 and particle size d50 by volume distribution as 11 microns.

The solid content was measured at 9.3 weight %. Dilute acetic acid (3 weight % in DI water) was added to reduce the protein content to 8.0 weight % without significantly affecting pH or particle size distribution.

### Preparation of spray-dried microcapsules

112.12g of diluted dispersion was homogenised with a Silverson L5M-A high-shear mixer (2 minutes at 8000 rpm) and 17.27 g of thymol, diluted at 40 weight % in Miglyol^{®} 812N, was added. The mixture was homogenised further with the Silverson at 8000 RPM for 5 minutes. It was expected that the droplet size was around 5 microns.

The sample was then spray-dried using a Buchi B290 Spray Dryer. The air inlet temperature was 130 °C at Q-flow setting of 40. The two-fluid nozzle was used with a tip size of 1.4mm. The aspirator flow rate was set at 100%. The fluid was pumped into the spray dryer with a syringe pump at a speed setting of 13% (4-5 ml/min). The dried microcapsules powder formed was collected from the collection pot. The microcapsules were analysed for their total thymol loading according to the method herein. This was found to be 3.9 weight %.

### Example 1a: 2^{nd} Thymol microcapsules preparation

### Preparation of spray-dried microcapsules

103.25g of diluted dispersion, prepared as in Example 1, was homogenised with a Silverson L5M-A high-shear mixer (2 minutes at 8000 rpm) and 16.81 g of thymol, diluted at 40 weight % in Miglyol^{®} 812N, was added. The mixture was homogenised further with the Silverson at 8000 RPM for 5 minutes. It was expected that the droplet size was around 5 microns.

The sample was then spray-dried as per the process in Example 1.

The dried microcapsules powder formed was collected from the collection pot. The microcapsules were analysed for their total thymol loading. This was found to be 4.9 weight %.

### Example 1b: Comparative Maltodextrin thymol microcapsules preparation

45g maltodextrin was dissolved in 105g of deionised water and mixed with a magnetic stirrer bar until a homogenous slurry was formed. 15.23 g of thymol, diluted at 40 weight % in Miglyol^{®} 812N, was added to the slurry, in addition to 0.14g of polysorbate 80. The mixture was homogenised with a Silverson L5M-A high-shear mixer for 5 minutes at 8000 rpm.

The sample was then spray-dried using a Buchi B290 Spray Dryer. The air inlet temperature was 130 °C at Q-flow setting of 40. The two-fluid nozzle was used with a tip size of 1.4mm. The aspirator flow rate was set at 100%. The fluid was pumped into the spray dryer with a syringe pump at a speed setting of 13% (4-5 ml/min).

The dried microcapsules powder formed was collected from the collection pot. The microcapsules were analysed for their total thymol loading. This was found to be 3.4 weight %.

### Example 2: Enzyme release test

Protease enzymes from Streptomyces griseus were made into a stock solution of 10 mg/ml enzyme in 10 mM sodium acetate + 5 mM calcium chloride solution (pH 7.5).

The thymol microcapsules powder of Example 1 was suspended in phosphate buffered saline (PBS) (pH 7.4) containing 0.2% w/v methylparaben according to Table 1, such that each sample contained 5 mg of thymol. The control sample Example 2a had no enzyme added, only sodium acetate and calcium chloride solution. Test sample Example 2b had protease solution added.

**Table 1 - composition of biodegradation test samples with and without protease enzymes**

| Test sample | Mass (mg) of microcapsules powder | Mass (mg) of enzyme solution | Mass (mg) of 10 mM NaOAc + 5 mM CaCl2 | Mass (mg) of PBS pH 7.4 + 0.2%wt methylparaben |
|---|---|---|---|---|
| Example 2a | 130 | 0 | 2977 | 4256 |
| No protease | | | | |
| Example 2b | 130 | 744 | 2233 | 4256 |
| Protease | | | | |

The samples were mixed on day 0 and placed in a 37°C incubator in the dark.

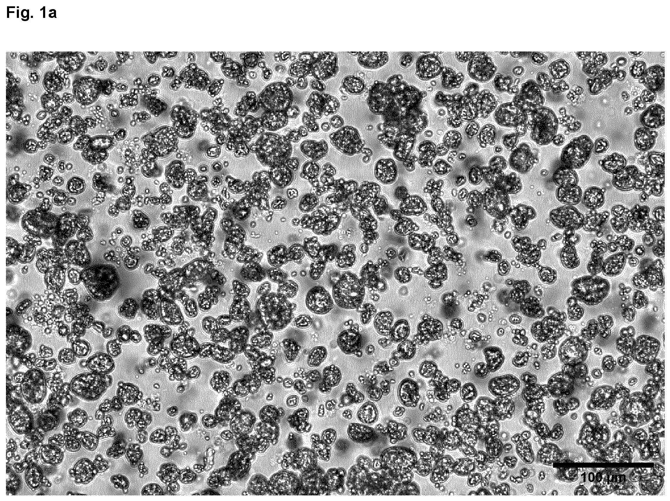

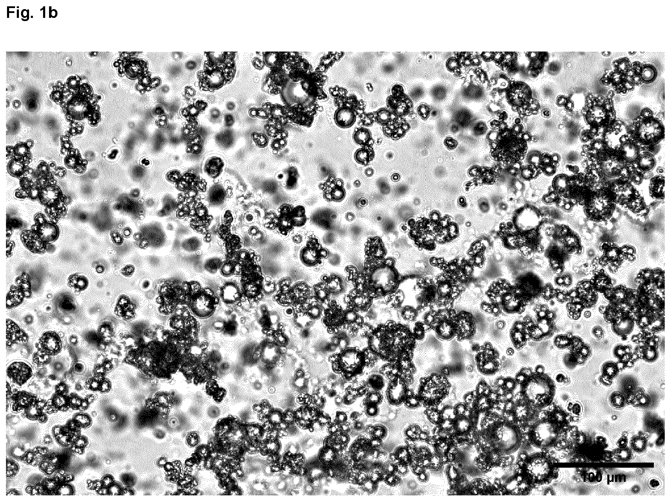

Figure 1a shows the intact multicore microcapsules of Example 2a after 7 days in the incubator in the absence of protease. Figure 1b shows the broken microcapsules and protein aggregates of Example 2b after 7 days in the incubator in the presence of the protease.

On day 7, the samples were centrifuged for 37 min at 4900 rpm, and the supernatant was transferred to 100 ml bottles. Ethanol was added to achieve a tenfold dilution of the supernatant samples. The concentration of thymol in the supernatant was measured by gas chromatography. This was used to calculate the quantity of thymol released from the capsules.

To the pelleted material after centrifugation of each sample, 2.9 ml of deionised water and 0.1 ml of 10% KOH solution were added. The mixtures were ultrasonicated (Bandelin Sonopuls HD4200, with probe TS104) for 2 minutes at 30% amplitude, vortexed and centrifuged for 5 minutes at 4900 rpm. 100 µl of the supernatant from each sample was diluted tenfold with ethanol, then the concentration of thymol measured by gas chromatography. This was used to calculate the quantity of thymol remaining in the supernatant at the end of the experiment, which was taken to be the quantity of thymol not originally released in the first supernatants. The results are shown in Table 2.

**Table 2 - Percentages of released and retained thymol after 7 days incubation**

| | % extractable thymol in supernatant | % extractable thymol in remaining shell material |
|---|---|---|
| Example 2a | 6% | 94% |
| Example 2b | 49% | 51% |

This release study demonstrated that in the absence of an enzyme, in Example 2a, the majority of the active ingredient, more than 90 %, remained encapsulated over 7 days. Such a slurry would be suitable for storage prior to being applied to fields and crops. In the presence of enzyme, the plant protein shell was broken and the active was released so that more than 45% was released after 7 days.

The thymol microcapsules powder of Example 1a was suspended in phosphate buffered saline (PBS) (pH 7.4) containing 0.2% w/v methylparaben according to Table 3, such that each sample contained 4 mg of thymol. The control sample Example 2c had no enzyme added, only sodium acetate and calcium chloride solution. Test sample Example 2d had protease solution added. Eight replicate samples were prepared each for Example 2c and Example 2d so that samples could be analysed at various time points, including t=0, 4hr, 24hr, 48hr, 72hr, 1 week, 10 days and two weeks of incubation.

**Table 3 - Composition of biodegradation test samples prepared in replicate for time series study, with and without protease enzymes**

| Test sample | Mass (mg) of microcapsules powder | Mass (mg) of enzyme solution | Mass (mg) of 10 mM NaOAc + 5 mM CaCl2 | Mass (mg) of PBS pH 7.4 + 0.2%wt methylparaben |
|---|---|---|---|---|
| Example 2c | 82 | 0 | 459 | 3541 |
| No protease | | | | |
| Example 2d | 82 | 459 | 0 | 3541 |
| Protease | | | | |

The samples were mixed on day 0 and placed in a 37°C incubator in the dark, except for t=0 samples, which were analysed immediately. At each time point, samples were centrifuged for 30 min at 4900 RPM, and the supernatant transferred to 50ml Falcon tubes. Ethanol was added to achieve a tenfold dilution of the supernatant samples. The concentration of thymol in the supernatant was measured by gas chromatography, which was used to calculate the quantity of thymol released from the capsules.

To the pelleted material after centrifugation of each sample, 2.9 ml of DI water and 0.1 ml of 10% KOH solution were added. The mixtures were ultrasonicated (Bandelin Sonopuls HD4200, with probe TS104) for 2 minutes at 30% amplitude, vortexed and centrifuged for 5 minutes at 4900 rpm. 100 µl of the supernatant from each sample was diluted tenfold with ethanol, then the concentration of thymol measured by gas chromatography. This was used to calculate the quantity of thymol remaining in the sample at the end of the experiment, which was taken to be the quantity of thymol not originally released in the first supernatants. The results are shown in Tables 4 and 5.

**Table 4 - Percentages of released and retained thymol in samples without protease enzymes**

| Example 2c | % extractable thymol in supernatant | % extractable thymol in remaining shell material |
|---|---|---|
| t=0 | 3 | 97 |
| t=4hr | 6 | 94 |
| t=24hr | 5 | 95 |
| t=48hr | 6 | 94 |
| t=72hr | 5 | 95 |
| t=1 week | 8 | 92 |
| t=10 days | 7 | 93 |
| t=2 weeks | 6 | 94 |

**Table 5 - Percentages of released and retained thymol in samples with protease enzymes**

| Example 2d | % extractable thymol in supernatant | % extractable thymol in remaining shell material |
|---|---|---|
| t=0 | 5 | 95 |
| t=4hr | 3 | 97 |
| t=24hr | 5 | 95 |
| t=48hr | 21 | 79 |
| t=72hr | 27 | 73 |
| t=1 week | 51 | 49 |
| t=10 days | 36 | 64 |
| t=2 weeks | 49 | 51 |

This release study demonstrated that in the absence of an enzyme, in Example 2c, the majority of the active ingredient, more than 90%, remained encapsulated over 2 weeks. Such a slurry would be suitable for storage prior to being applied to fields and crops. In the presence of enzyme, the plant protein shell was broken and the active was released in a time-dependant manner, such that nearly 50% release was achieved in 2 weeks.

### Example 2e: Comparative Maltodextrin-thymol release test

The thymol microcapsules powder of Example 1b was suspended in phosphate buffered saline (PBS) (pH 7.4) containing 0.2% w/v methylparaben according to Table 6, such that each sample contained 4 mg of thymol.

**Table 6 - Composition of test sample with maltodextrin-thymol capsules**

| Test sample | Mass (mg) of microcapsules powder | Mass (mg) of PBS pH 7.4 + 0.2%wt methylparaben |
|---|---|---|
| Example 2e Maltodextrin capsules | 119 | 4000 |

The sample was prepared, mixed and incubated for one hour. The sample was centrifuged for 10 min at 4900 RPM, and the supernatant transferred to 50ml Falcon tube. Ethanol was added to achieve a tenfold dilution of the supernatant samples. The concentration of thymol in the supernatant was measured by gas chromatography, which was used to calculate the quantity of thymol released from the capsules in buffered water.

To the pelleted material after centrifugation of sample, 2.9 ml of deionised water and 0.1 ml of 10% KOH solution were added. The mixture was ultrasonicated (Bandelin Sonopuls HD4200, with probe TS104) for 2 minutes at 30% amplitude, vortexed and centrifuged for 5 minutes at 4900 rpm. 100 µl of supernatant was diluted tenfold with ethanol, then the concentration of thymol measured by gas chromatography. This was used to calculate the quantity of thymol remaining in the sample at the end of the experiment, which was taken to be the quantity of thymol not originally released in the first supernatant. The results are shown in Table 7.

**Table 7 - Percentage of released and retained thymol in sample containing maltodextrin-thymol capsules**

| Example 2e | % extractable thymol in supernatant | % extractable thymol in remaining shell material |
|---|---|---|
| t=1 hour | 42 | 58 |

This release study demonstrated that for maltodextrin capsules, in Example 2e, a substantial portion of active ingredient, more than 40%, was released after 1 hour in an aqueous buffer even in the absence of any enzymes. Such a slurry would not be suitable for storage prior to being applied to fields and crops. Once prepared into an aqueous composition, or in the presence of water in the environment such as rain, it would prematurely release the active ingredient thereby demonstrating no controlled release properties.

### Example 3: Thymol soil release test

The thymol microcapsules powder of Example 1a was added to a soil water medium extracted from soil at Cambridge Science Park, UK, and the release of thymol was measured over time. The location of soil collection was 52°13'53.5"N 0°08'44.3"E, or 'tape.steps.chief' under the what3words convention. Soil water was prepared by adding 16.6g soil to 33.2g reverse osmosis water and was inverted several times to form a slurry. The slurry was centrifuged at 4900 RPM for 5 min. The supernatant (soil water) was collected and passed through a 10µm filter. The thymol microcapsules powder of Example 1a was suspended in the filtered soil water according to Table 8, such that each sample contained 4 mg of thymol.

**Table 8 - Composition of test samples with soil water**

| Test sample | Mass (mg) of microcapsules powder | Mass (mg) of soil water |
|---|---|---|
| Example 3a | 82 | 4000 |

The samples were mixed on day 0 and placed in a 37°C incubator in the dark. At each time point, a sample was centrifuged for 30 min at 4900 RPM, and the supernatant transferred to 50ml Falcon tubes. Ethanol was added to achieve a ten-fold dilution of the supernatant samples. The concentration of thymol in the supernatant was measured by gas chromatography, which was used to calculate the quantity of thymol released from the capsules.

To the pelleted material after centrifugation of each sample, 2.9 ml of DI water and 0.1 ml of 10% KOH solution were added. The mixtures were ultrasonicated (Bandelin Sonopuls HD4200, with probe TS104) for 2 minutes at 30% amplitude, vortexed and centrifuged for 5 minutes at 4900 rpm. 100 µl of the supernatant from each sample was diluted ten-fold with ethanol, then the concentration of thymol measured by gas chromatography. This was used to calculate the quantity of thymol remaining in the sample at the end of the experiment, which was taken to be the quantity of thymol not originally released in the first supernatants. The results are shown in Table 9.

**Table 9 - Percentages of released and retained thymol in samples with soil water**

| Example 3a | % extractable thymol in supernatant | % extractable thymol in remaining shell material |
|---|---|---|
| t=24hr | 5 | 95 |
| t=72hr | 8 | 92 |
| t=1 week | 45 | 55 |

This release study demonstrated that in the presence of soil water the active was released, so that 45% was released after 7 days. The soil water at 72 hours was observed under the microscope to contain bacteria, which would be naturally occurring in the sampled soil. These bacteria can produce protease that break the plant protein microcapsules shell.

### Example 4: Thymol microcapsules preparation via double emulsion process

### Preparation of a protein dispersion

A 10% w/w pea protein isolate and 35% w/w lactic acid protein slurry was made by adding 12g pea protein isolate, 58.8g reverse osmosis water and 49.4g 85% lactic acid to a 250 ml Nalgene bottle and shaken. The pH was measured as 1.78. 100 ml of the protein dispersion was ultrasonicated with 100 kJ inputted at 80% amplitude (Bandelin Sonopuls HD4200, with probe TS104).

The particle size distribution was measured using via Dynamic Light Scattering due to the 35% w/w acid content of this dispersion, according to the method herein described. Within 2 of hours sonication, 2 ml of the slurry was diluted into 18 ml of 35% w/w lactic acid at 80°C, mixed thoroughly and then diluted 10 times with 35% w/w lactic acid at 80°C so that final concentration of solids was 0.1 w/v%. The particle size distribution d₅₀ by volume was 29.9 nm (+/- 6.4 nm based on 3 repeats). This value is comparable to the value that would be obtained by laser diffraction.

### Preparation of Double Emulsion microcapsules

Immediately after ultrasonication of the protein dispersion a primary emulsion was prepared.

An 80% w/w solution of thymol in Miglyol^{®} 812N was prepared and kept in hot water until ready to use. A primary emulsion was prepared by adding 60 ml of the thymol/Miglyol^{®} 812N mixture to the hot dispersion with overhead stirring at 600 rpm for 30 seconds.

A mixture of Miglyol^{®} 840 and 0.5% w/w polyglycerol polyricinoleate (PGPR) was prepared and heated to 53°C. The primary emulsion was then manually poured into 300mls of the heated Miglyol^{®} 840 and PGPR mixture, with overhead stirring at 1000 rpm for 2 minutes. Stirring was then reduced to 700 rpm for 4 minutes, adding an ice bath halfway through. Stirring was reduced further to 500 rpm for 24 minutes. The microcapsules were allowed to settle at 4°C for 2 hours.

Excess oil was decanted off and the sedimented microcapsules were transferred to a 1L beaker with 400 ml 100mM sodium tripolyphosphate (NaTPP) and 4% w/w polysorbate 80. The microcapsules were agitated at 150 rpm for 15 minutes using a 4-blade Teflon impeller to remove excess oil. The microcapsules were collected on a 200 µm sieve and resuspended in a separating funnel in pH 3 reverse osmosis water. The microcapsules were again collected on a 75 µm sieve and resuspended in pH 3 reverse osmosis water. The washing process was repeated three more times. The microcapsules were finally resuspended in a solution of 0.1M sodium citrate and 20mM calcium chloride and 0.1% w/w sodium benzoate. The microcapsules were analysed for their total thymol loading according to the method herein. This was found to be 1.02 weight %. The particle sizes were determined manually by optical microscopy and Image J analysis due to elongated shape of microcapsules. The average length and width were measured as 143 µm and 98 µm, respectively.

### Example 5: Enzyme release test

Protease enzymes from Streptomyces griseus were made into a stock solution of 10 mg/ml enzyme in 10 mM sodium acetate + 5 mM calcium chloride solution (pH 7.5).

Microcapsules of Example 4 were poured onto a 38 µm sieve and washed with 450 ml PBS pH 7.4 containing 0.2% w/v methylparaben for pH adjustment. The microcapsules were dried with tissues by capillary action from underneath the sieve for accurate dry mass measurements. Microcapsules were suspended in PBS (pH 7.4) containing 0.2% w/v methylparaben according to Table 10, such that each sample contained 4 mg thymol. Samples were prepared in duplicate for measurements at two time points - 0 and 14 days.

The control sample Example 5a had no enzyme added, only sodium acetate and calcium chloride solution. Test sample Example 5b had protease solution added.

**Table 10 - composition of biodegradation test samples with and without protease enzymes**

| Test sample | Mass (mg) of dried microcapsules | Mass (mg) of enzyme solution | Mass (mg) of 10 mM NaOAc + 5 mM CaCl2 | Mass (mg) of PBS pH 7.4 + 0.2%wt methylparaben |
|---|---|---|---|---|
| Example 5a | 392 | 0 | 250 | 3750 |
| No protease | | | | |
| Example 5b | 130 | 250 | 0 | 3750 |
| Protease | | | | |

The samples were mixed on day 0 and placed in a 37°C incubator in the dark. On day 0, one of each sample, with and without protease, was centrifuged for 30 min at 4900 rpm to speed up the sedimentation of the microcapsules. The supernatant was transferred to 50 ml Falcon tubes. Ethanol was added to achieve a tenfold dilution of the supernatant samples. The concentration of thymol in the supernatant was measured by gas chromatography. This was used to calculate the quantity of thymol released from the microcapsules on day 0.

On day 14, one of each sample, with and without protease, was again analysed for the level of thymol in the supernatant, but without the need for a centrifugation step before transfer of the supernatant.

Separately, to the sedimented material of each sample, 2.9 ml of deionised water and 0.1 ml of 10% KOH solution were added. The mixtures were ultrasonicated (Bandelin Sonopuls HD4200, with probe TS104) for 2 minutes at 30% amplitude, vortexed and centrifuged for 5 minutes at 4900 rpm in order to break the microcapsules and release the remaining thymol. 100 µl of the supernatant from each sample was diluted tenfold with ethanol, then the concentration of thymol was measured by gas chromatography. This was used to calculate the quantity of thymol remaining in the supernatant at the end of the experiment, which was taken to be the quantity of thymol not originally released in the supernatant at day 0. The results are shown in Tables 11 and 12.

**Table 11 - Percentages of released and retained thymol after 14 days incubation without protease enzymes**

| Example 5c | % extractable thymol in supernatant | % extractable thymol in remaining shell material |
|---|---|---|
| t=0 | 5 | 95 |
| t=14 days | 4 | 96 |

**Table 12 - Percentages of released and retained thymol after 14 days incubation with protease enzymes**

| Example 5d | % extractable thymol in supernatant | % extractable thymol in remaining shell material |
|---|---|---|
| t=0 | 5% | 95% |
| t=14 days | 68% | 32% |

This release study demonstrated that in the absence of a protease enzyme, as in Example 5c, the majority of the active ingredient, more than 95%, remained encapsulated after 14 days in water. Such a slurry would be suitable for storage prior to being applied to fields and crops. In the presence of a protease enzyme, as in Example 5d, the plant protein shell was broken and the active was released so that after 14 days 68% had been released.

### Example 6: ISO Biodegradation testing

Empty spray dried microcapsules were prepared for biodegradation testing of the shell material. The protein hydrogel dispersion was prepared as in Example 1 and was spray-dried using a Buchi B290 Spray Dryer without the addition of any agrochemical. The air inlet temperature was 120 °C at Q-flow setting of 50. The two-fluid nozzle was used with a tip size of 1.4mm. The aspirator flow rate was set at 120%. The fluid was pumped into the spray dryer with a peristaltic pump at a speed setting of 30% (9 ml/min). The dried microcapsules powder formed was collected from the collection pot.

The biodegradation in soil of these spray dried microcapsules was tested in the standard aerobic soil biodegradation test, ISO 17556:2019. The empty powdered microcapsules, with only shell material and no agrochemical, was incubated with soil as the inoculum in the dark, at 25°C. The water holding capacity, pH and organic-matter content of the soil was measured and controlled. The ratio of carbon in the sample to nitrogen in soil is also controlled. Soil biodegradation was measured as the production of carbon dioxide in a respirometer. The level of biodegradation was expressed as a percentage by comparing the amount of carbon dioxide evolved with the theoretical amount. The test was completed in duplicate.

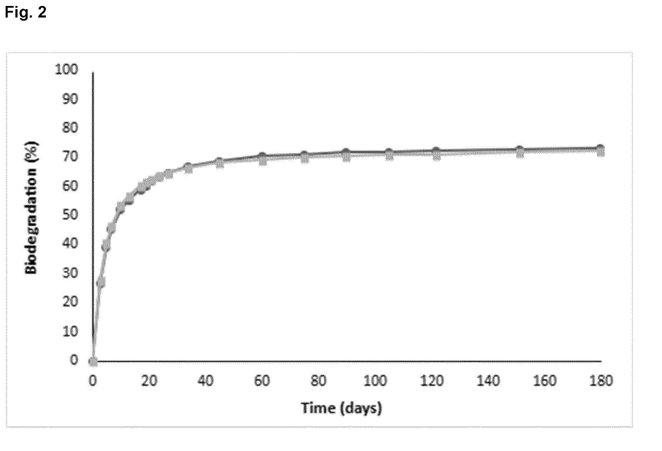

The biodegradation was measured at regular intervals and the test was continued for 180 days. The results for the microcapsule shell (2 repicates) can be seen in Figure 2. The shell material biodegraded immediately and a very high rate. After 10 days the biodegradation rate was already 53%. After 28 days the biodegradation was 65%. The rate slowed down over time and after 180 days a biodegradation of 73.0% +/-0.6% was reached. This demonstrates that the microcapsule shell is highly succeptible to biodegradation by microbes in the soil.

A reference material, microcyrstalline cellulose, was also tested. For the test to be valid its biodegradation needed to be more than 60% at the plateau phase or at the end of the test. After 180 days the absolute biodegradation level of the control was 82.7% +/- 0.2%, therefore the test was valid.

## Claims

1. A method for the preparation of biodegradable microcapsules comprising an agrochemical, the method comprising:
(a) forming a suspension of particles comprising one or more plant-based protein(s) in a solvent system, wherein the solvent system comprises miscible co-solvents, wherein a first co-solvent is an organic acid and a second co-solvent is water, and wherein the solids content of the plant-based protein in the suspension is 5 weight-% or more;
(b) reducing the size of the protein particles to d₅₀ of 20 microns or less by volume distribution as determined by laser diffraction;
dispersing an agrochemical in the plant-based protein suspension to form a composition;
either (d1) spray-drying the composition to form microcapsules comprising the agrochemical, or (d2) dispersing the composition in an immiscible oil to form microcapsules comprising the agrochemical and removing at least part of the oil from the microcapsules; and
further comprising a step of altering the pH of the plant-based protein suspension such that it is different to the isoelectric point of the plant-based protein by more than 1 pH unit.

2. The method according to claim 1, wherein the plant-based protein(s) each have an amount of less than 50 % non-polar amino acids, preferably wherein the protein is selected from pea protein, potato protein, rapeseed protein, lentil protein, chickpea protein, fava bean protein, mung bean protein, sunflower seed protein, pumpkin seed protein, flax protein, chia protein, canola protein, lupine protein, alfalfa protein, moringa protein and/or rice protein, more preferably wherein the protein is pea protein and/or potato protein.

3. The method according to claim 1 or claim 2, wherein the first co-solvent is acetic acid, formic acid, gluconic acid, propionic acid, an α-hydroxy acid, and/or a β-hydroxy acid, preferably lactic acid.

4. The method according to any one of claims 1 to 3, wherein in step (b) the protein solution is heated to a first temperature above the sol-gel transition temperature of the one or more plant-based protein(s) solution, then reduced to a second temperature below the sol-gel transition temperature of the one or more plant- based protein(s) solution to form a hydrogel, and/or wherein in step (b) the protein suspension undergoes shear treatment comprising a shear step that involves further reducing the size of the protein particles, preferably wherein the particle size d₅₀ by volume distribution as determined by dynamic laser diffraction is reduced to the range of 0.1 to 15 microns, preferably 0.2 to 10 microns, preferably 0.5 to 5 microns.

5. The method according to any one of claims 1 to 4, wherein the step of altering the pH of the plant-based protein suspension is performed either after step (b) or after step (c).

6. The method according to any one of claims 1 to 5, wherein the composition formed in step (c) has a protein solids content in the range of 1 weight % to 25 weight % based upon the total weight of the composition, preferably 2 weight % to 20 weight %, more preferably 3 weight % to 15 weight %, even more preferably 4 weight % to 12 weight %.

7. The method according to any one of claims 1 to 6, wherein the agrochemical is selected from pesticides, including fungicides, herbicides, insecticides, algicides, moluscicides, miticides and rodenticides, and antimicrobials, including germicides, antibiotics, anti-bacterials, antivirals, antifungals, antiprotozoals and anti-parasites, or combinations thereof, preferably wherein the agrochemical is dispersed in a carrier phase.

8. The method according to any one of claims 1 to 7, further comprising subjecting the microcapsules comprising the agrochemical to a post-treatment step, preferably wherein the post-treatment step comprises a non-covalent cross- linking step, a covalent cross-linking step or a coating formation step, wherein the non-covalent cross-linking step preferably comprises treating the microcapsules comprising the agrochemical with a non-covalent cross linker selected from sodium tripolyphosphate, sodium hexametaphosphate, and phenolic compounds, wherein the covalent cross-linking step preferably comprises treating the microcapsules comprising the agrochemical with a covalent cross linker selected from genipin, epoxy compounds, glyceraldehyde, glutaraldehyde, formaldehyde, glyoxal, dialdehyde starch, microbial transglutaminase, and polyamide based crosslinking resin, or combinations thereof, and wherein the coating formation step preferably comprises subjecting the microcapsules comprising the agrochemical to a complex coacervation step using a polysaccharide and/or treating the microcapsules comprising the agrochemical with an aqueous mineral solution.

9. Biodegradable microcapsules comprising an agrochemical obtained by or obtainable by the method of any one of claims 1 to 8.

10. A method for the preparation of a biodegradable microcapsules composition, the method comprising:
preparing biodegradable microcapsules comprising an agrochemical according to the method as claimed in any one of claims 1 to 8; and
suspending the biodegradable microcapsules comprising the agrochemical in an external aqueous phase.

11. A biodegradable microcapsules composition obtained by or obtainable by the method of claim 10.

12. The biodegradable microcapsules according to claim 11, wherein the plant-based protein(s) encapsulating the agrochemical is selected from pea protein, potato protein, soy protein, rapeseed protein, lentil protein, chickpea protein, fava bean protein, mung bean protein, sunflower seed protein, pumpkin seed protein, flax protein, chia protein, canola protein, lupine protein, alfalfa protein, moringa protein and/or rice protein, preferably wherein the plant- based protein(s) encapsulating the agrochemical is pea protein and/or potato protein, more preferably wherein the plant-based protein(s) encapsulating the agrochemical is selected from pea protein and soy protein and the agrochemical is selected from essential oils and components of essential oils, and/or wherein the plant-based protein(s) encapsulating the agrochemical have a protein secondary structure with at least 40% intermolecular β-sheet, preferably at least 50% intermolecular β-sheet, more preferably at least 60% intermolecular β-sheet, even more preferably at least 70% intermolecular β-sheet, even more preferably at least 80% intermolecular β-sheet, most preferably at least 90% intermolecular β-sheet, wherein the % intermolecular β-sheet content is measured by FTIR.

13. The biodegradable microcapsules according to any one of claims 11 to 12,
wherein the agrochemical is dispersed in a carrier phase.

14. The biodegradable microcapsules according to any one of claims 11 to 13, wherein the plant-based protein encapsulating the agrochemical has been non-covalently modified by a non-covalent cross-linker, or the plant-based protein has been covalently modified by a covalent cross-linker, or the plant-based protein has a coating deposited thereon.

15. A biodegradable microcapsules composition comprising the biodegradable microcapsules as claimed in any one of claims 11 to 14 and an external phase.

## Patentansprüche

1. Verfahren zum Herstellen biologisch abbaubarer Mikrokapseln, die ein agrochemisches Mittel enthalten, wobei das Verfahren umfasst:
(a) Bilden einer Suspension aus Teilchen, die ein oder mehrere pflanzliche Proteine enthalten, in einem Lösungsmittelsystem, wobei das Lösungsmittelsystem mischbare Kolösungsmittel umfasst, wobei ein erstes Kolösungsmittel eine organische Säure und ein zweites Kolösungsmittel Wasser ist, und wobei der Feststoffgehalt des pflanzlichen Proteins in der Suspension 5 Gew.-% oder mehr beträgt;
(b) Verringern der Größe der Protein-Teilchen auf einen d₅₀-Wert von 20 µm oder weniger, bestimmt anhand der Volumenverteilung mittels Laserdiffraktion;
Dispergieren eines agrochemischen Mittels in der pflanzlichen Proteinsuspension, um eine Zusammensetzung zu bilden;
entweder (d1) Sprühtrocknen der Zusammensetzung, um Mikrokapseln zu bilden, die das agrochemische Mittel umfassen, oder (d2) Dispergieren der Zusammensetzung in einem nicht mischbaren Öl, um Mikrokapseln zu bilden, die das agrochemische Mittel umfassen, und Entfernen mindestens eines Teils des Öls aus den Mikrokapseln; und
Ferner umfassend einen Schritt zum Ändern des pH-Werts der pflanzlichen Proteinsuspension derart, dass er um mehr als 1 pH-Einheit vom isoelektrischen Punkt des pflanzlichen Proteins abweicht.

2. Verfahren nach Anspruch 1, wobei das pflanzliche Protein bzw. die pflanzlichen Proteine jeweils einen Anteil an unpolaren Aminosäuren unterhalb von 50 % aufweisen, wobei das Protein vorzugsweise aus Erbsenprotein, Kartoffelprotein, Rapsprotein, Linsenprotein, Kichererbsenprotein, Ackerbohnenprotein, Mungbohnenprotein, Sonnenblumenkernprotein, Kürbiskernprotein, Leinsamenprotein, Chia-Protein, Canola-Protein, Lupinenprotein, Luzerneprotein, Moringa-Protein und/oder Reisprotein ausgewählt ist, wobei das Protein bevorzugt Erbsenprotein und/oder Kartoffelprotein ist.

3. Verfahren nach Anspruch 1 oder Anspruch 2, wobei das erste Kolösungsmittel Essigsäure, Ameisensäure, Gluconsäure, Propionsäure, eine α-Hydroxysäure und/oder eine p-Hydroxysäure, vorzugsweise Milchsäure, ist.

4. Verfahren nach einem der Ansprüche 1 bis 3, wobei in Schritt (b) die Proteinlösung auf eine erste Temperatur oberhalb der Sol-Gel-Übergangstemperatur der Lösung des einen oder der mehreren pflanzlichen Proteine erhitzt und anschließend auf eine zweite Temperatur unterhalb der Sol-Gel-Übergangstemperatur der Lösung des einen oder der mehreren pflanzlichen Proteine abgekühlt wird, um ein Hydrogel zu bilden, und/oder wobei in Schritt (b) die Proteinsuspension einer Scherbehandlung unterzogen wird, die einen Scherschritt umfasst, bei dem die Teilchengröße der Proteinpartikel weiter verringert wird, wobei vorzugsweise die durch dynamische Laserdiffraktion bestimmte Volumenverteilung der Teilchengröße dso auf den Bereich von 0,1 bis 15 µm, vorzugsweise 0,2 bis 10 µm, vorzugsweise 0,5 bis 5 µm, reduziert wird.

5. Verfahren nach einem der Ansprüche 1 bis 4, wobei der Schritt der Veränderung des pH-Werts der pflanzlichen Proteinsuspension entweder nach Schritt (b) oder nach Schritt (c) durchgeführt wird.

6. Verfahren nach einem der Ansprüche 1 bis 5, wobei die in Schritt (c) gebildete Zusammensetzung ein Proteingehalt im Bereich von 1 Gew.-% bis 25 Gew.-%, bezogen auf das Gesamtgewicht der Zusammensetzung, aufweist, vorzugsweise von 2 Gew.-% bis 20 Gew.-%, noch bevorzugter von 3 Gew.-% bis 15 Gew.-% und am meisten bevorzugt von 4 Gew.-% bis 12 Gew.-%.

7. Verfahren nach einem der Ansprüche 1 bis 6, wobei das agrochemische Mittel Pestizide einschließt, einschließlich Fungiziden, Herbiziden, Insektiziden, Algiziden, Molluskiziden, Mitiziden und Rodentiziden, sowie antimikrobielle Mittel, einschließlich Germiziden, Antibiotika, antibakterielle Mittel, antivirale Mittel, Antimykotika, Antiprotozoenmittel und Antiparasitika, oder Kombinationen davon ausgewählt ist, wobei das agrochemische Mittel vorzugsweise in einer Trägerphase dispergiert ist.

8. Verfahren nach einem der Ansprüche 1 bis 7, ferner umfassend das Unterziehen der das agrochemische Mittel umfassenden Mikrokapseln einem Nachbehandlungsschritt, wobei der Nachbehandlungsschritt vorzugsweise einen nicht-kovalenten Vernetzungsschritt, einen kovalenten Vernetzungsschritt oder einen Beschichtungsbildungsschritt umfasst, wobei der nicht-kovalente Vernetzungsschritt vorzugsweise die Behandlung der das agrochemische Mittel umfassenden Mikrokapseln mit einem nicht-kovalenten Vernetzungsmittel umfasst, das ausgewählt ist aus Natriumtripolyphosphat, Natriumhexametaphosphat und phenolische Verbindungen, wobei der kovalente Vernetzungsschritt vorzugsweise die Behandlung der das agrochemische Mittel umfassenden Mikrokapseln mit einem kovalenten Vernetzungsmittel umfasst, das ausgewählt ist aus Genipin, Epoxidverbindungen, Glyceraldehyd, Glutaraldehyd, Formaldehyd, Glyoxal, Dialdehyd-Stärke, mikrobieller Transglutaminase und einem Vernetzungsharz auf Polyamidbasis oder Kombinationen davon, und wobei der Beschichtungsbildungsschritt vorzugsweise das Unterziehen der das agrochemische Mittel umfassenden Mikrokapseln einem komplexen Koazervationsschritt unter Verwendung eines Polysaccharids und/oder die Behandlung der das agrochemische Mittel umfassenden Mikrokapseln mit einer wässrigen Minerallösung umfasst.

9. Biologisch abbaubare Mikrokapseln, umfassend ein agrochemisches Mittel, das durch das Verfahren nach einem der Ansprüche 1 bis 8 erhalten wurde oder erhältlich ist.

10. Verfahren zum Herstellen einer Zusammensetzung aus biologisch abbaubaren Mikrokapseln, wobei das Verfahren Folgendes umfasst: Herstellen von biologisch abbaubaren Mikrokapseln, umfassend ein agrochemisches Mittel, nach dem in einem der Ansprüche 1 bis 8 beanspruchten Verfahren; und Suspendieren der biologisch abbaubaren Mikrokapseln, umfassend das agrochemische Mittel, in einer äußeren wässrigen Phase.

11. Zusammensetzung aus biologisch abbaubaren Mikrokapseln, die nach dem Verfahren nach Anspruch 10 erhalten wurde oder erhältlich ist.

12. Biologisch abbaubare Mikrokapseln nach Anspruch 11, wobei das bzw. die pflanzlichen Proteine, die das agrochemische Mittel einkapseln, ausgewählt sind aus Erbsenprotein, Kartoffelprotein, Sojaprotein, Rapsprotein, Linsenprotein, Kichererbsenprotein, Ackerbohnenprotein, Mungbohnenprotein, Sonnenblumenkernprotein, Kürbiskernprotein, Leinsamenprotein, Chia-Protein, Canola-Protein, Lupinenprotein, Luzerneprotein, Moringa-Protein und/oder Reisprotein, wobei vorzugsweise das pflanzliche Protein bzw. die pflanzlichen Proteine, das bzw. die das agrochemische Mittel einkapseln, Erbsenprotein und/oder Kartoffelprotein ist bzw. sind, bevorzugter, wobei das pflanzliche Protein bzw. die pflanzlichen Proteine, das bzw. die das agrochemische Mittel einkapseln, aus Erbsenprotein und Sojaprotein ausgewählt ist bzw. sind und das agrochemische Mittel aus ätherischen Ölen und Komponenten von ätherischen Ölen ausgewählt ist, und/oder wobei das pflanzliche Protein bzw. die pflanzlichen Proteine, das bzw. die das agrochemische Mittel einkapseln, eine Protein-Sekundärstruktur mit mindestens 40 % intermolekularem β-Faltblatt, vorzugsweise mindestens 50 % intermolekularem β-Faltblatt, noch bevorzugter mindestens 60 % intermolekularem β-Faltblatt, am meisten bevorzugt mindestens 70 % intermolekularem β-Faltblatt, am meisten bevorzugt mindestens 80 % intermolekularem β-Faltblatt, am allermeisten bevorzugt mindestens 90 % intermolekularem β-Faltblatt, aufweist, wobei der prozentuale Gehalt an intermolekularem β-Faltblatt mittels FTIR gemessen wird.

13. Biologisch abbaubare Mikrokapseln nach einem der Ansprüche 11 bis 12, wobei das agrochemische Mittel in einer Trägerphase dispergiert ist.

14. Biologisch abbaubare Mikrokapseln nach einem der Ansprüche 11 bis 13, wobei das pflanzliche Protein, das das agrochemische Mittel einkapselt, durch ein nichtkovalentes Vernetzungsmittel nichtkovalent modifiziert wurde, oder das pflanzliche Protein durch ein kovalentes Vernetzungsmittel kovalent modifiziert wurde, oder das pflanzliche Protein eine Beschichtung aufweist.

15. Zusammensetzung aus biologisch abbaubaren Mikrokapseln, umfassend die biologisch abbaubaren Mikrokapseln nach einem der Ansprüche 11 bis 14 und eine äußere Phase.

## Revendications

1. Procédé de préparation de microcapsules biodégradables comprenant un produit agrochimique, le procédé comprenant :
(a) la formation d'une suspension de particules comprenant une ou plusieurs protéine(s) à base végétale dans un système de solvant, dans lequel le système de solvant comprend des co-solvants miscibles, dans lequel un premier co-solvant est un acide organique et un deuxième co-solvant est de l'eau, et dans lequel la teneur en solides de la protéine à base végétale dans la suspension est de 5 % en poids ou plus ;
(b) la réduction de la taille des particules de protéine à d₅₀ de 20 microns ou moins par distribution de volume comme déterminée par diffraction laser ;
la dispersion d'un produit agrochimique dans la suspension de protéine à base végétale pour former une composition ;
soit (d1) le séchage de la composition par pulvérisation pour former des microcapsules comprenant le produit agrochimique, soit (d2) la dispersion de la composition dans une huile non-miscible pour former des microcapsules comprenant le produit agrochimique et l'élimination d'au moins une partie de l'huile des microcapsules ; et
comprenant en outre une étape de modification du pH de la suspension de protéine à base végétale de telle sorte qu'elle est différente du point isoélectrique de la protéine à base végétale de plus de 1 unité de pH.

2. Procédé selon la revendication 1, dans lequel la ou les protéine(s) à base végétale présente/présentent chacune une quantité inférieure à 50 % d'acides aminés non-polaires, de préférence dans lequel la protéine est choisie dans le groupe constitué par une protéine de pois, une protéine de pomme de terre, une protéine de colza, une protéine de lentille, une protéine de pois chiche, une protéine de féverole, une protéine de haricot mungo, une protéine de graine de tournesol, une protéine de graine de citrouille, une protéine de lin, une protéine de chia, une protéine de canola, une protéine de lupin, une protéine de luzerne, une protéine de moringa et/ou une protéine de riz, plus préférablement dans lequel la protéine est une protéine de pois et/ou une protéine de pomme de terre.

3. Procédé selon la revendication 1 ou la revendication 2, dans lequel le premier co-solvant est l'acide acétique, l'acide formique, l'acide gluconique, l'acide propionique, un acide α-hydroxylé, et/ou un acide β-hydroxylé, de préférence l'acide lactique.

4. Procédé selon l'une quelconque des revendications 1 à 3, dans lequel, à l'étape (b), la solution de protéine est chauffée jusqu'à une première température au-dessus de la température de transition sol-gel de la solution de protéine(s) à base végétale, puis réduite jusqu'à une deuxième température au-dessous de la température de transition sol-gel de la solution de protéine(s) à base végétale pour former un hydrogel, et/ou dans lequel, à l'étape (b), la suspension de protéine subit un traitement de cisaillement comprenant une étape de cisaillement qui inclut en outre la réduction de la taille des particules de protéine, de préférence dans lequel la taille de particule d₅₀ par distribution de volume comme déterminée par diffraction laser dynamique est réduite jusqu'à la plage allant de 0,1 à 15 microns, de préférence de 0,2 à 10 microns, de préférence de 0,5 à 5 microns.

5. Procédé selon l'une quelconque des revendications 1 à 4, dans lequel l'étape de modification du pH de la suspension de protéine à base végétale est effectuée soit après l'étape (b) soit après l'étape (c).

6. Procédé selon l'une quelconque des revendications 1 à 5, dans lequel la composition formée à l'étape (c) présente une teneur en solides protéiques dans la plage allant de 1 % en poids à 25 % par rapport au poids total de la composition, de préférence de 2 % en poids à 20 % en poids, plus préférablement de 3 % en poids à 15 % en poids, de préférence encore de 4 % en poids à 12 % en poids.

7. Procédé selon l'une quelconque des revendications 1 à 6, dans lequel le produit agrochimique est choisi dans le groupe constitué par les pesticides, y compris les fongicides, les herbicides, les insecticides, les algicides, les molluscicides, les antimites et les rodenticides, et les antimicrobiens, y compris les germicides, les antibiotiques, les antibactériens, les antiviraux, les antifongiques, les antiprotozoaires et les antiparasites, ou des combinaisons de ceux-ci, de préférence dans lequel le produit agrochimique est dispersé dans une phase véhicule.

8. Procédé selon l'une quelconque des revendications 1 à 7, comprenant en outre la soumission des microcapsules comprenant le produit agrochimique à une étape de post-traitement, de préférence dans lequel l'étape de post-traitement comprend une étape de réticulation non-covalente, une étape de réticulation covalente ou une étape de formation de revêtement, dans lequel l'étape de réticulation non-covalente comprend de préférence le traitement des microcapsules comprenant le produit agrochimique avec un agent de réticulation non-covalent choisi dans le groupe constitué par le tripolyphosphate de sodium, l'hexamétaphosphate de sodium et les composés phénoliques, dans lequel l'étape de réticulation covalente comprend de préférence le traitement des microcapsules comprenant le produit agrochimique avec un agent de réticulation covalent choisi dans le groupe constitué par la génipine, les composés époxy, le glycéraldéhyde, le glutaraldéhyde, le formaldéhyde, le glyoxal, l'amidon dialdéhyde, la transglutaminase microbienne et une résine de réticulation à base de polyamide, ou des combinaisons de ceux-ci, et dans lequel l'étape de formation de revêtement comprend de préférence la soumission des microcapsules comprenant le produit agrochimique à une étape de coacervation complexe à l'aide d'un polysaccharide et/ou le traitement des microcapsules comprenant le produit agrochimique avec une solution minérale aqueuse.

9. Microcapsules biodégradables comprenant un produit agrochimique obtenu ou pouvant être obtenu par le procédé selon l'une quelconque des revendications 1 à 8.

10. Procédé de préparation d'une composition de microcapsules biodégradables, le procédé comprenant :
la préparation de microcapsules biodégradables comprenant un produit agrochimique selon le procédé selon l'une quelconque des revendications 1 à 8 ; et
la mise en suspension des microcapsules biodégradables comprenant le produit agrochimique dans une phase aqueuse externe.

11. Composition de microcapsules biodégradables obtenue ou pouvant être obtenue par le procédé selon la revendication 10.

12. Microcapsules biodégradables selon la revendication 11, dans lesquelles la ou les protéine(s) à base végétale encapsulant le produit agrochimique est/sont choisie(s) dans le groupe constitué par une protéine de pois, une protéine de pomme de terre, une protéine de soja, une protéine de colza, une protéine de lentille, une protéine de pois chiche, une protéine de féverole, une protéine de haricot mungo, une protéine de graine de tournesol, une protéine de graine de citrouille, une protéine de lin, une protéine de chia, une protéine de canola, une protéine de lupin, une protéine de luzerne, une protéine de moringa et/ou une protéine de riz, de préférence dans lesquelles la ou les protéine(s) à base végétale encapsulant le produit agrochimique est/sont une protéine de pois et/ou une protéine de pomme de terre, plus préférablement dans lesquelles la ou les protéine(s) à base végétale encapsulant le produit agrochimique est/sont choisie(s) dans le groupe constitué par une protéine de pois et une protéine de soja, et le produit agrochimique est choisi dans le groupe constitué par les huiles essentielles et les composants d'huiles essentielles, et/ou dans lesquelles la ou les protéine(s) à base végétale encapsulant le produit agrochimique présente/présentent une structure secondaire protéique avec au moins 40 % de feuillet β intermoléculaire, de préférence au moins 50 % de feuillet β intermoléculaire, plus préférablement au moins 60 % de feuillet β intermoléculaire, de préférence encore au moins 70 % de feuillet β intermoléculaire, de préférence encore au moins 80 % de feuillet β intermoléculaire, le plus préférablement au moins 90 % de feuillet β intermoléculaire, dans lesquelles la teneur en feuillet β intermoléculaire en % est mesurée par FTIR.

13. Microcapsules biodégradables selon l'une quelconque des revendications 11 à 12, dans lesquelles le produit agrochimique est dispersé dans une phase véhicule.

14. Microcapsules biodégradables selon l'une quelconque des revendications 11 à 13, dans lesquelles la protéine à base végétale encapsulant le produit agrochimique a été modifiée de manière non-covalente par un agent de réticulation non-covalent, ou la protéine à base végétale a été modifiée de manière covalente par un agent de réticulation covalent, ou la protéine à base végétale présente un revêtement déposé sur celle-ci.

15. Composition de microcapsules biodégradables comprenant les microcapsules biodégradables selon l'une quelconque des revendications 11 à 14 et une phase externe.
